# EUROPÄISCHE PATENTSCHRIFT

(11) **EP 1 877 276 B1**
(45) Veröffentlichungstag und Bekanntmachung des Hinweises auf die Patenterteilung: **05.01.2011**
(21) Anmeldenummer: 06722815.5
(22) Anmeldetag: 18.04.2006
(51) Int. Cl.: B60N 2/12, B60N 2/08

(54) **VERSTELLEINRICHTUNG FÜR EIN KRAFTFAHRZEUG**
ADJUSTER DEVICE FOR A MOTOR VEHICLE
DISPOSITIF DE REGLAGE POUR UN VEHICULE A MOTEUR

(30) Priorität: 28.04.2005 DE 102005020696
(43) Veröffentlichungstag der Anmeldung: 16.01.2008
(73) Patentinhaber: Brose Fahrzeugteile GmbH & Co. KG, Coburg, 96450 Coburg (DE)
(72) Erfinder: QUAST, Ingo, 96450 Coburg (DE)
(74) Vertreter: Baumgärtel, Gunnar
(86) Internationale Anmeldenummer: PCT/DE2006/000697
(87) Internationale Veröffentlichungsnummer: WO 2006/114084

(56) Entgegenhaltungen:
- EP-A- 0 698 523
- WO-A-2005/025927
- DE-A1- 4 419 335
- US-A- 4 378 101

## Beschreibung

Die Erfindung betrifft eine Verstelleinrichtung für ein Kraftfahrzeug nach dem Oberbegriff des Patentanspruchs 1.

Eine derartige Verstelleinrichtung, die eingerichtet und vorgesehen ist zur Betätigung eines Kraftfahrzeugteiles, umfasst ein schwenkbar gelagertes Betätigungselement; einen Kraftübertragungsmechanismus, mit dem eine Verstellkraft bzw. ein Verstellmoment in das Betätigungselement einleitbar ist, so dass dieses verschwenkt wird; sowie ein mit dem Betätigungselement gekoppeltes, schwenkbar gelagertes Steuerelement, das bei einer Schwenkbewegung des Betätigungselementes mitgenommen und ebenfalls verschwenkt wird. Das schwenkbar gelagerte und durch den Kraftübertragungsmechanismus über das ebenfalls drehbare Betätigungselement auslenkbare Steuerelement kann insbesondere zur Einwirkung auf ein nachgeordnetes Verstellteil eines Kraftfahrzeugs vorgesehen sein, um dessen räumliche Lage einstellen bzw. steuern zu können. Eine derartige Verstelleinrichtung ist aus der DE 44 19 335 A1 bekannt.

Bei dem dem Steuerelement nachgeordneten Verstellteil kann es sich etwa um ein Verriegelungselement einer so genannten Memory-Einrichtung für einen längenverstellbaren Kraftfahrzeugsitz handeln. Hiermit lässt sich bei einer Neueinstellung der Sitzlängsposition die bisherige, aktuelle Sitzlängsposition speichern, indem das Verriegelungselement, welches beispielsweise an einer von zwei zueinander längsverschiebbaren Führungsschienen eines Kraftfahrzeugsitzes angeordnet ist, mit einer zugeordneten Verriegelungsstelle in Eingriff gebracht wird, die an der anderen der beiden zueinander beweglichen Führungsschienen vorgesehen ist. Eine derartige Memory-Einrichtung wird beispielsweise verwendet bei Kraftfahrzeugsitzen mit so genannter Easy-Entry-Funktion, die sich mit vorgeklappter Rückenlehne vorverlagem lassen, um den Einstieg von Personen hinter dem entsprechenden Kraftfahrzeugsitz zu erleichtern. Dies ist insbesondere bei zweitürigen Kraftfahrzeugen mit Rücksitzen von Bedeutung.

Das Steuerelement kann hierbei insofern eine Doppelfunktion übernehmen, als es in mindestens einer Schwenklage gleichzeitig als Mitnehmer dient, welcher derart mit dem nachgeordneten Verstellteil in Form eines Verriegelungselementes einer Memory-Einrichtung zusammenwirkt, dass das Verriegelungselement bei einer Neueinstellung der Sitzlängsposition mit hochgeklappter Rückenlehne mitgenommen wird. Wird demgegenüber die Rückenlehne in Richtung auf die Sitzfläche des entsprechenden Kraftfahrzeugsitzes vorgeklappt, um den Sitz im Rahmen der so genannten Easy-Entry-Funktion nach vorne zu verlagern, so wird das Steuerelement derart verschwenkt, dass es das Verriegelungselement der Memory-Einrichtung freigibt und dieses, zum Beispiel unter der Einwirkung eines hierfür vorgesehenen elastischen Elementes, mit einer zugeordneten Verriegelungsstelle in Eingriff tritt, um die aktuelle Sitzlängsposition als Memory-Position zu speichern, so dass der entsprechende Kraftfahrzeugsitz nach der Ausübung der Easy-Entry-Funktion und einem anschließenden Zurückschieben automatisch in der ursprünglichen Sitzlängsposition wieder angehalten wird.

Bei solchen Kraftfahrzeugsitzanordnungen kann je nach der Konstruktion des Kraftfahrzeugsitzes im jeweiligen Einzelfall sowie in Abhängigkeit von dem für den Easy-Entry-Mechanismus im Bereich des Sitzes zur Verfügung stehenden Raum ein unterschiedlicher Schwenkwinkel des Steuerelementes bei der Einwirkung auf das nachgeordnete Verstellteil (z. B. eines Verriegelungselementes für eine Memory-Einrichtung) zweckmäßig sein. Dies führt insofern zu einem erhöhten Aufwand bei der Auslegung der Memory-Einrichtung, als für unterschiedliche Typen von Kraftfahrzeugsitzen jeweils unterschiedlich konstruierte Memory-Einrichtungen zur Verfügung gestellt werden müssen.

Der Erfindung liegt daher das Problem zugrunde, eine Verstelleinrichtung der eingangs genannten Art zu schaffen, die sich flexibel an unterschiedliche Vorgaben hinsichtlich eines optimalen Schwenkwinkels des Steuerelementes bei der Einwirkung auf ein nachgeordnetes Verstellteil anpassen lässt.

Dieses Problem wird durch die Schaffung einer Verstelleinrichtung mit den Merkmalen des Patentanspruchs 1 gelöst.

Danach ist ein elastisches Element vorgesehen, über das das Betätigungselement derart auf das Steuerelement einwirkt, dass das Steuerelement bei einer Schenkbewegung des Betätigungselementes mitgenommen wird und das Betätigungselement seine Schwenkbewegung unter Deformation des elastischen Elementes fortführen kann, wenn das Steuerelement mit einem dessen Schwenkwinkel begrenzenden Endanschlag in Eingriff tritt. Das Steuerelement steht über ein zweites elastisches Element mit dem zugeordneten Endanschlag in Wirkverbindung. Das Steuerelement gerät somit nicht unmittelbar mit dem zugeordneten Endanschlag in Anlage; vielmehr erfolgt dies indirekt über das zweite elastische Element.

Die erfindungsgemäße Lösung hat den Vorteil, dass der Schwenkwinkel, den das Steuerelement beim Zusammenwirken mit einem nachgeordneten Verstellteil zurücklegt, nicht fest an den Schwenkwinkel gekoppelt ist, den das vorgelagerte Betätigungselement bei einer Krafteinleitung über den Kraftübertragungsmechanismus zurücklegt. Vielmehr kann der vom Steuerelement zurückgelegte Schwenkwinkel bezüglich des Schwenkwinkels des vorgelagerten Betätigungselementes reduziert werden, indem ein Teil der Schwenkbewegung des Betätigungselementes erfindungsgemäß in eine Deformation des Federelementes umgesetzt wird, über das das Betätigungselement mit dem nachgeordneten Steuerelement in Verbindung steht. Während jener Restbewegung des Betätigungselementes, die unter zunehmender Deformation des besagten Federelementes erfolgt, bleibt das Steuerelement ortsfest, da der zugeordnete Endanschlag ein weiteres Verschwenken begrenzt.

Das Betätigungselement und das nachgelagerte Steuerelement sind dabei bevorzugt koaxial auf einer gemeinsamen Achse gelagert.

Das zweite elastische Element wird bei einer (über den Kraftübertragungsmechanismus und das Betätigungselement erzeugten) Schwenkbewegung des Steuerelementes deformiert, bis der Endanschlag zusammen mit dem komprimierten zweiten elastischen Element eine weitere Schwenkbewegung des Steuerelementes verhindert.

Das zweite elastische Element kann weiterhin dazu dienen, das Steuerelement in eine Ausgangsposition vorzuspannen, in der es an einem hierfür vorgesehenen Gegenanschlag anliegt. Bei der Ausgangsposition, in der das Steuerelement gegen den besagten Gegenanschlag vorgespannt ist, kann es sich beispielsweise um eine Mitnahmeposition handeln, in der das Steuerelement bei einer Verstellbewegung der Verstelleinrichtung ein nachgeordnetes Verstellteil mitnehmen kann, d. h., das Steuerelement wirkt in der Mitnahmeposition derart auf das nachgelagerte Verstellteil ein, z. B. durch Anlage an einem Mitnahmebereich des Verstellteiles, dass dieses bei einer Bewegung des Steuerelementes in Verstellrichtung mitgenommen wird. Die Schwenkbewegung des Steuerelementes in Richtung auf den besagten Endanschlag (unter der Wirkung eines über den Kraftübertragungsmechanismus und das Betätigungselement eingeleiteten Momentes) erfolgt dann entgegen der Vorspannung jenes zweiten elastischen Elementes, wobei dieses - wie beschrieben - (zunehmend) deformiert wird.

Bei dem zweiten elastischen Element kann es sich beispielsweise um eine Schenkelfeder handeln, deren eines freie Ende an dem Steuerelement und deren anderes freies Ende an dem die Schwenkbewegung des Steuerelementes begrenzenden Endanschlag anliegt. Das elastische Element ist dabei bevorzugt auf dem Steuerelementes oder auf dessen (ortsfester) Schwenkachse gelagert.

Auch das erste elastische Element, über das das Betätigungselement auf das Steuerelement einwirkt, kann durch eine auf dem Steuerelement oder dessen (ortsfester) Schwenkachse gelagerte Schenkelfeder in Form einer Drehfeder gebildet werden, auf deren eines freie Ende das Betätigungselement zur Erzeugung einer Schwenkbewegung des Steuerelementes einwirkt, während das andere freie Ende der Schenkelfeder durch entsprechende Einwirkung auf das Steuerelement dessen Schwenkbewegung hervorruft. Hierzu kann zwischen den beiden freien Enden der Schenkelfeder je ein Abschnitt (z. B. in Form eines Fortsatzes) sowohl des Betätigungselementes als auch des Steuerelementes derart angeordnet sein, dass über die besagten Abschnitte des Betätigungselementes einerseits und des Steuerelementes andererseits das beschriebene Zusammenwirken mit den freien Enden der Schenkelfeder ermöglicht wird.

Dieses erfolgt insbesondere in der Weise, dass bei einer durch Krafteinleitung in das Betätigungselement ausgelösten Drehbewegung des Betätigungselementes das Betätigungselement auf den in Drehrichtung vorderen Schenkel des ersten Federelementes einwirkt und dieses verspannt, wodurch der in Drehrichtung hintere Schenkel des ersten Federelementes das Steuerelement mitnimmt.

Bei dem Kraftübertragungsmechanismus kann es sich z.B. um einen Bowdenzug handeln, dessen längserstreckte Seele in Form eines Zugmittels am Betätigungselement angreift.

Bei Anwendung der erfindungsgemäßen Anordnung in einem Kraftfahrzeugsitz, insbesondere mit Easy-Entry-Funktion und Memory-Einrichtung, kann der Kraftübertragungsmechanismus an die Rückenlehne gekoppelt sein, so dass beim Vorklappen der Rückenlehne bzw. der Betätigung eines zur Auslösung der Easy-Entry-Funktion vorgesehenen Lehnenhebels eine Kraft bzw. ein Moment in das Betätigungselement eingeleitet wird, welches zu einer Schwenkbewegung des Betätigungselementes und wegen dessen Kopplung mit dem Steuerelement schließlich zu einer Schwenkbewegung des Steuerelementes führt.

Ein derartiger Kraftfahrzeugsitz mit einer erfindungsgemäßen Verstelleinrichtung ist durch die Merkmale des Patentanspruchs 28 charakterisiert.

Weitere Einzelheiten und Vorteile der Erfindung werden bei der nachfolgenden Beschreibung eines Ausführungsbeispieles anhand derfiguren deutlich werden.

Es zeigen.
- Fig. 1a: eine perspektivische Darstellung eines an einer Oberschiene einer Sitzlängsführung für einen Kraftfahrzeugsitz angeordneten Teiles einer Memory-Einrichtung für einen Kraftfahrzeugsitz, der sich mit vorgeklappter Rückenlehne zur Einstiegserleichterung vorverlagern lässt;
- Fig. 1b: die Darstellung aus Figur 1a ohne die Oberschiene;
- Fig. 1c: eine vergrößerte Darstellung der Anordnung aus Figur 1b in anderer Perspektive;
- Fig. 2: eine schematische Seitenansicht der Anordnung aus den Figuren 1a bis 1c;
- Fig. 3: eine Ansicht gemäß Figur 2 beim Vorklappen der Rückenlehne des zugehörigen Kraftfahrzeugsitzes in Richtung auf die Sitzfläche;
- Fig. 4: eine Ansicht gemäß Figur 2 nach dem Vorklappen der Rückenlehne des zugehörigen Kraftfahrzeugsitzes in Richtung auf die Sitzfläche;
- Fig. 5: eine perspektivische Darstellung einer bekannten Memory-Einrichtung für einen Kraftfahrzeugsitz, der sich mit vorgeklappter Rückenlehne zur Einstiegserleichterung vorverlagem lässt;
- Fig. 6: eine perspektivische Darstellung eines Verriegelungselementes der Memory- Einrichtung aus Figur 5;
- Fig. 7a: eine schematisch geschnittene Seitenansicht der Memory-Einrichtung aus Figur 5 bei in Gebrauchsposition befindlicher, aufrechter Rückenlehne;
- Fig. 7b: eine schematisch geschnittene Seitenansicht der Memory-Einrichtung aus Figur 5 bei vorgeklappter Rückenlehne, wobei das Verriegelungselement der Memory-Einrichtung noch nicht in eine zugeordnete Verriegelungsschiene eingerastet ist;
- Fig. 8a: eine schematisch geschnittene Seitenansicht der Memory-Einrichtung aus Figur 5 bei vorgeklappter Rückenlehne, wobei das Verriegelungselement der Memory-Einrichtung in eine einzelne Verriegelungsöffnung einer zugeordneten Verriegelungsschiene eingerastet ist;
- Fig. 8b: eine schematisch geschnittene Seitenansicht der Memory-Einrichtung aus Figur 5 bei vorgeklappter Rückenlehne, wobei das Verriegelungselement der Memory-Einrichtung in zwei Verriegelungsöffnungen einer zugeordneten Verriegelungsschiene eingerastet ist;
- Fig. 9: eine schematische Darstellung eines Sitzgestells eines Kraftfahrzeugsitzes.

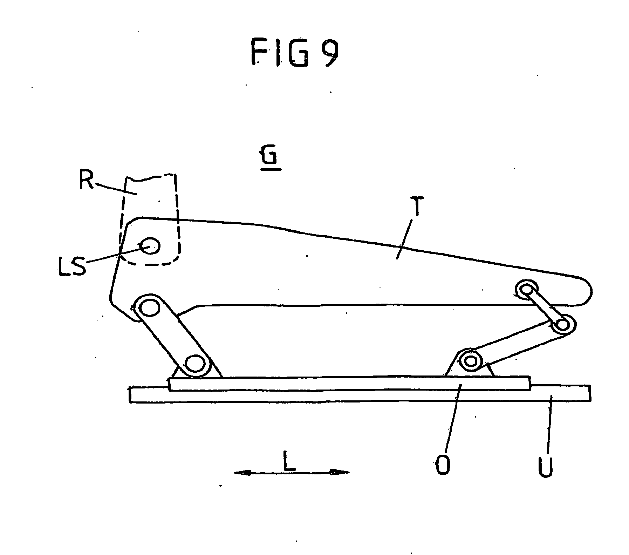

Ein in Figur 9 in einer Seitenansicht schematisch dargestelltes Sitzgestell G (Sitzuntergestell) umfasst eine sitzseitige Führungsschiene O (Sitzschiene bzw. Oberschiene), die in Schienenlängsrichtung L beweglich auf einer an der Fahrzeugkarosserie zu befestigenden Führungsschiene U (Unterschiene) lagert, sowie ein Sitzseitenteil T, das über vordere und hintere Gelenkhebel höhenverstellbar an der Sitzschiene 102 angelenkt ist. Auf der anderen, in Figur 9 nicht erkennbaren Längsseite weist das Sitzgestell G eine entsprechende Anordnung auf. Zwischen den beiden Sitzseitenteilen des Sitzgestells G erstreckt sich ein Sitzträger zur Aufnahme eines Sitzpolsters, auf dessen Sitzfläche ein Fahrzeuginsasse Platz nehmen kann.

Ferner weisen die Seitenteile T des Sitzgestelles G jeweils eine Lagerstelle LS zur schwenkbaren Lagerung einer in Figur 9 gestrichelt angedeuteten Rückenlehne R auf.

Vorliegend werden als Teile des Sitzgestells jeweils alle diejenigen Gestell-Bauteile verstanden, die auf der karosseriefesten Unterschiene U in Schienenlängsrichtung L bewegbar sind, also insbesondere die Sitzschiene O, das Sitzseitenteil T sowie die hiermit verbundenen weiteren Bauteile des Sitzes, wie z. B. die der Höhenverstellung dienenden Gelenkhebel sowie die Rückenlehne R.

Wird ein derartiger in Längsrichtung L verstellbarer Fahrzeugsitz für ein zweitüriges Fahrzeug verwendet, so ist es bekannt, zur Erleichterung des Einstiegs in den Fond des Fahrzeugs die Lehne derart an die Sitzlängsverstellung zu koppeln, dass bei einem Vorklappen der Rückenlehne R in Richtung auf die sich zwischen den Sitzseitenteilen T erstreckende Sitzfläche eine der Schienenlängsführung O, U zugeordnete Feststellvorrichtung entriegelt wird und der Sitz mit vorgeklappter Rückenlehne vorverlagert werden kann. Diese Einstiegserleichterung wird regelmäßig als Easy-Entry-Funktion bezeichnet.

Soll der Fahrzeugsitz nach dem Vorklappen der Rückenlehne auf die Sitzfläche und dem anschließenden Verschieben in eine den Einstieg erleichternde, vorverlagerte Position wieder in seine Ausgangsposition (vor Ausübung der Easy-Entry-Funktion) zurückgeschoben werden, so erleichtert eine so genannte Memory-Einrichtung das Wiederauffinden der ursprünglichen Sitzposition. Mittels einer Memory-Einrichtung kann beim Vorklappen der Rückenlehne R auf die Sitzfläche eines Fahrzeugsitzes die aktuelle Sitzlängsposition des Sitzgestells G gespeichert und der Sitz beim Zurückschieben aus der vorverlagerten Position automatisch in der als Memory-Position gespeicherten Sitzlängsposition wieder angehalten werden, wobei ein Gegenanschlag einer gemeinsam mit dem Sitzgestell G verschiebbaren Baugruppe auf einen Anschlag der Memory-Einrichtung trifft. Derartige Kraftfahrzeugsitze mit Easy-Entry-Funktion und Memory-Funktion sind bekannt. Für weitere Einzelheiten wird diesbezüglich beispielhaft auf die WO 00/55 002 A1 verwiesen.

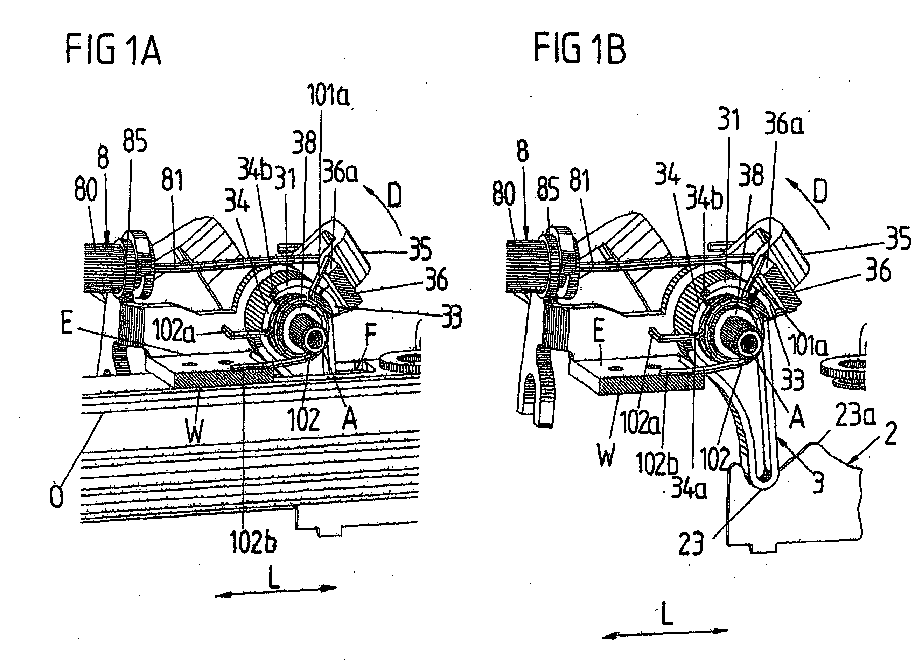

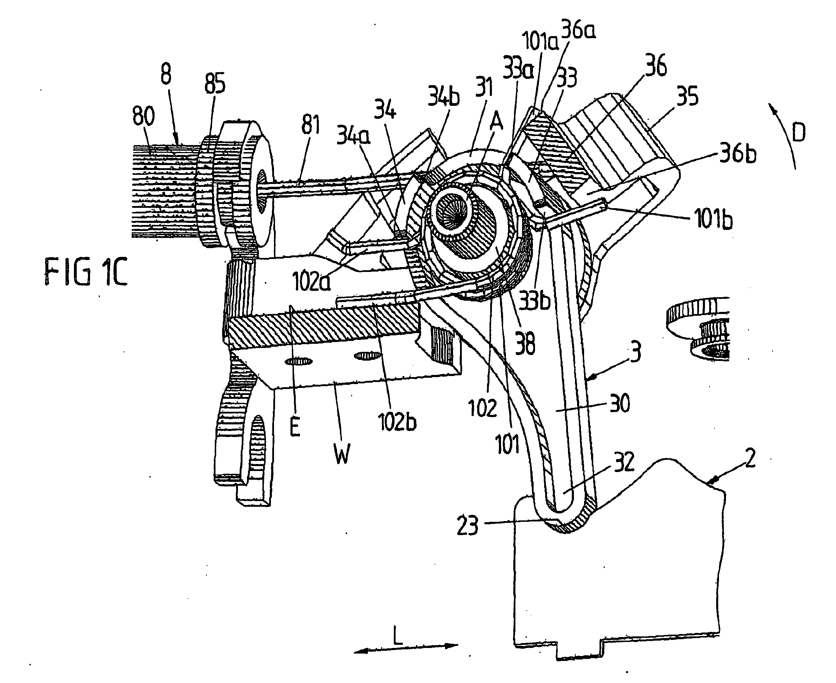

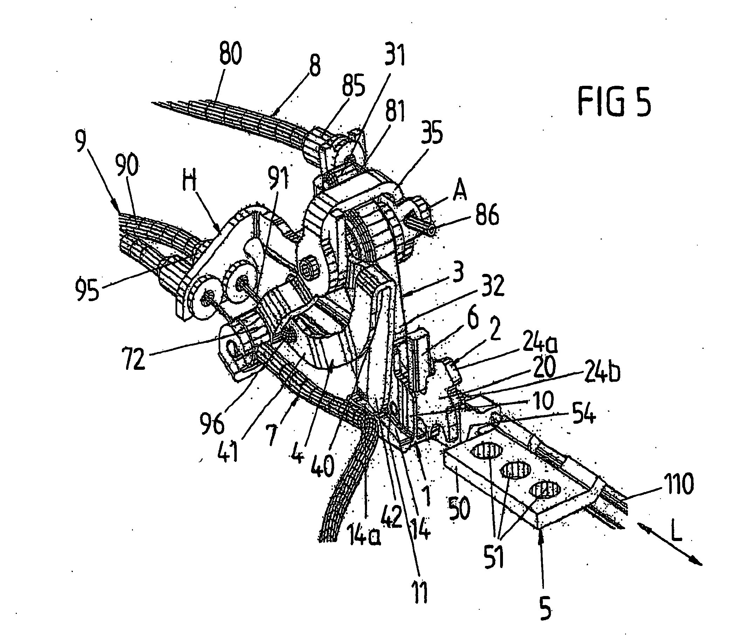

Nachfolgend wird zunächst anhand der Figuren 5 bis 8b eine aus der DE 20 2004 011 388 U1 bekannte Ausgestaltung einer Memory-Einrichtung für einen Kraftfahrzeugsitz mit Einstiegserleichterung (Easy-Entry-Funktion) erläutert werden. Daran anschließend wird dann anhand der Figuren 1a bis 4 eine erfindungsgemäße Abwandlung und Weiterbildung einer solchen Memory-Einrichtung im Einzelnen beschrieben werden.

Figur 5 zeigt die wesentlichen Komponenten einer Memory-Einrichtung für einen Kraftfahrzeugsitz mit Einstiegserleichterung der in Figur 9 dargestellten Art.

Die Memory-Einrichtung umfasst als Einstellmittel einen Gleiter 1, der auf einer in Schienenlängsrichtung L erstreckten Gleitschiene längsverschieblich gelagert ist und dessen Grundkörper 10 eine Achse 11 zur schwenkbaren Lagerung eines Verriegelungselementes 2 der Memory-Einrichtung aufweist. Der Gleiter 1 kann auf der Gleitschiene 110, die bevorzugt mit der karosseriefest anzuordnenden Unterschiene U der in Figur 9 dargestellten Schlenenlängsführung zu einer Baugruppe zusammengefasst ist, in Schienenlängsrichtung L in unterschiedliche Längspositionen verschoben werden, in denen er dann durch Verschwenken des schwenkbar am Grundkörper 10 des Gleiters 1 gelagerten Verriegelungselementes 2 verriegelbar ist. Sowohl der Gleiter 1 als auch die zugeordnete Gleiterführung 110 bestehen dabei bevorzugt aus Kunststoff.

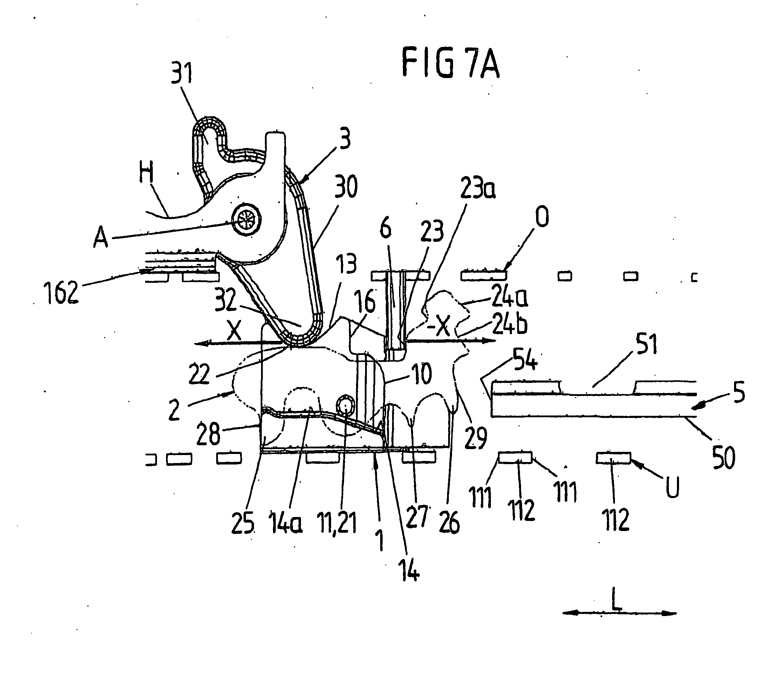

Eine aktuelle Längsposition des Gleiters 1, in der die Memory-Einrichtung mittels des Verriegelungselementes 2 verriegelt ist, entspricht jeweils einer Memory-Position, in der das Sitzgestell G des in Figur 9 dargestellten Fahrzeugsitzes beim Zurückschieben aus einer zur Einstiegserleichterung vorverlagerten Position automatisch angehalten werden kann. Dies wird nachfolgend anhand der Figuren 7a bis 8b näher beschrieben werden.

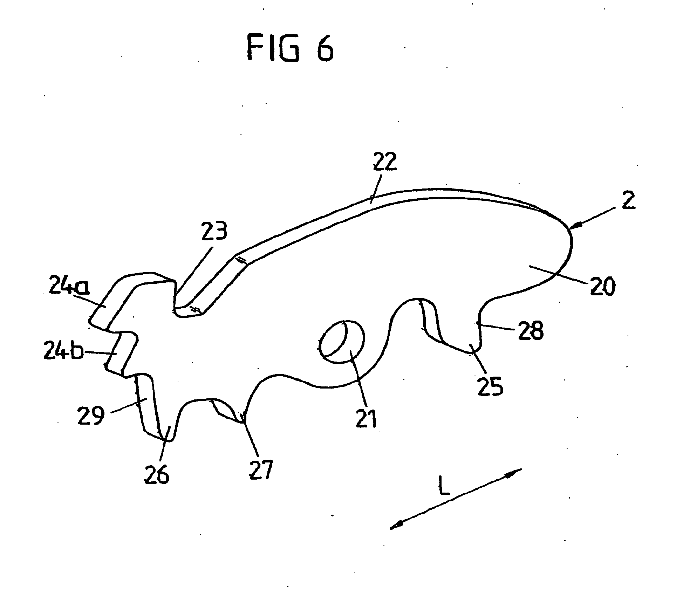

Das zusätzlich in Figur 6 separat dargestellte und vorteilhaft als kostengünstiges Stanzteil ausbildbare Verriegelungselement 2 umfasst einen Grundkörper 20 mit einer Lagerstelle 21 zur schwenkbaren Lagerung des Verriegelungselementes 2 auf der hierfür vorgesehenen Lagerachse 11 am Grundkörper 10 des Gleiters 1. An der Oberseite des Verriegelungselementes 2 erstreckt sich eine Steuerfläche 22, über die das Verriegelungselement 2 mit einem in Figur 5 dargestellten Steuerelement 3 in Form eines Steuerhebels zusammenwirken kann, um den Zustand des Verriegelungselementes zu steuern. Dabei wird unterschieden zwischen einem Zustand, in dem das Verriegelungselement mit seinem durch zwei Rastzähne 26, 27 gebildeten Eingriffsbereich in mindestens eine Verriegelungsöffnung einer Verriegelungsschiene eingreift, so dass die Memory-Einrichtung in einer bestimmten Sitzlängsposition verriegelt ist, und einem Zustand, in dem der durch die beiden in Schienenlängsrichtung L voneinander beabstandeten Sperrzähne gebildete Eingriffsbereich aus der zugeordneten Verriegelungsschiene ausgehoben ist, so dass sich die aus dem Gleiter 1 und dem Verriegelungselement 2 bestehende Memory-Baugruppe 1, 2 zur Neueinstellung der Memory-Position in Schienenlängsrichtung L verschieben lässt.

Ferner weist das Verriegelungselement 2 einen Lagerzapfen 25 für ein elastisches Element, insbesondere in Form einer Schraubenfeder, das sich am Gleiter 1 abstützen kann und mit dem das Verriegelungselement in Richtung auf den verriegelten Zustand vorgespannt sein kann, so dass der Steuerhebel 3 insbesondere zum Ausheben des Eingriffsbereiches 26, 27 des Verriegelungselementes 2 aus der zugeordneten Verriegelungsschiene entgegen der Wirkung jenes elastischen Elementes dient.

Um die Memory-Baugruppe 1, 2 in Schienenlängsrichtung L verschieben zu können, wenn das Verriegelungselement 2 aus der zugeordneten Verriegelungsschiene ausgehoben ist, weist das Verriegelungselement 2 an seiner Oberseite einen durch einen Anschlag gebildeten Mitnahmebereich 23 auf, in den ein mit dem Sitzgestell G, insbesondere dessen Sitzschiene O (vergleiche Figur 9) verbundener Mitnehmer 6 eingreifen kann, um die Memory-Baugruppe 1, 2 für eine Neueinstellung der Memory-Position mitzunehmen.

An einer Stirnseite des Verriegelungselementes 2 sind ferner Anschlagflächen 24a, 24b vorgesehen, die im verriegelten Zustand des Verriegelungselementes mit einem sitzgestellseitigen bzw. sitzschienenseitigen Gegenanschlag zusammenwirken können, um das Sitzgestell in der aktuellen Memory-Position anzuhalten.

Zwei weitere, an entgegengesetzten Stirnseiten des Verriegelungselementes 2 vorgesehene Flächen 28, 29 dienen als Anschläge, wenn das Sitzgestell G (vergleiche Figur 9) in seine hinterste Position verfahren wird. Die eine Fläche 28 gerät dann in Kontakt mit einem an der fahrzeugfesten Unterschiene 1 vorgesehenen Endanschlag und die andere Fläche 29 gerät in Kontakt mit einem an dem Führungskörper 50 ausgebildeten Gegenanschlag.

Der Steuerhebel 3 ist an einem Hebelende 31 schwenkbar auf einer Achse A gelagert, die an einem sitzschienenfesten Haltewinkel H ausgebildet ist und weist an seinem anderen Ende 32 eine Steuerkontur (Steuerfläche) auf, über die er mit dem Verriegelungselement 2 zusammenwirken kann. Der Steuerhebel 3 ist an einem Ende 31 mit der durch ein in einer Bowdenhülle 80 (mit Bowdenabstützung 85) geführtes Zugmittel 81 gebildeten Seele eines Bowdenzugs 8 wirkverbunden. Hierzu liegt das eine Ende 31 des angefederten Steuerhebels 3 an einem zugeordneten Betätigungselement in Form einer Wippe 35 an, in die das Zugmittel 81 mit einem Ende 86 formschlüssig eingehängt ist. Über diesen Bowdenzug 8 ist der Steuerhebel 3 mit der Rückenlehne R (vergleiche Figur 9) des Sitzgestells G gekoppelt, so dass er beim Vorklappen der Rückenlehne R auf die Sitzfläche des Sitzgestells G verschwenkbar ist.

Auf der gleichen Achse A wie der Steuerhebel 3 ist ferner ein Auslösehebel 4 mit einer in seinem Grundkörper 40 vorgesehenen Lagerstelle schwenkbar gelagert. Der Auslösehebel 4 ist, ebenso wie der Steuerhebel 3, an einem Ende 41 mit der durch ein in einer Bowdenhülle 90 (mit Bowdenabstützung 95) geführtes Zugmittel 91 gebildeten Seele eines Bowdenzugs 9 verbunden, indem ein Ende 96 des Zugmittels 91 formschlüssig in einer Öffnung am besagten Ende 41 des Auslösehebels 4 eingehängt ist. Das andere Ende 42 des Auslösehebels 4 kann mit einer Rampe 14 einer Betätigungsfläche 14, 14a des Gleiters 1 der Memory-Baugruppe 1, 2 zusammenwirken, wenn das Sitzgestell die aktuell eingestellte Memory-Position anfährt. Der Auslösehebel 4 dient zur Entriegelung eines Verriegelungsmechanismus, mit dem die Rückenlehne R (vergleiche Figur 9) in ihrem auf die Sitzfläche vorgeklappten Zustand verriegelbar ist, durch Einwirkung auf den Verriegelungsmechanismus über den zugeordneten Bowdenzug 9.

Der Haltewinkel H bildet somit zusammen mit den daran befestigten Komponenten, insbesondere dem Steuerhebel 3 und dem Auslösehebel 4 ein vormontierbares Modul, das komplett vormontiert an der Sitzschiene O (vergleiche Figur 9) eines Sitzgestells befestigt werden kann. Dabei kann der Auslösehebel 4 optional nur für den Fall vorgesehen sein, dass das Sitzgestell mit einem Verriegelungsmechanismus zur Verriegelung der Rückenlehne im vorgeklappten Zustand ausgerüstet ist.

Ein weiterer mit der Rückenlehne R in Wirkverbindung stehender Bowdenzug 7 dient zur Kopplung der Rückenlehne R an die Feststellvorrichtung 5 der Schienenlängsführung O, U (vergleiche Figur 9), um diese beim Vorklappen der Rückenlehne R auf die Sitzfläche des Sitzgestells G in bekannter Weise lösen zu können, so dass sich die beiden Führungsschienen O, U zur Vorverlagerung des Sitzgestells G zueinander verschieben lassen. Dieser weitere Bowdenzug 7 ist über die oben beschriebene Wippe 35 mit der Rückenlehne gekoppelt, wobei der Bowdenzug 7 über ein Distanzstück 72 vergleichsweise große Winkelbewegungen der Wippe 35 (bis zu 60°) aufnehmen kann. Bei einem Verschwenken der Wippe 35 wird eine Bewegung der Hülle des Bowdenzugs 7 entlang der Bowdenzugachse bewirkt, welche für die Entriegelung der Feststellvorrichtung 5 genutzt wird.

Von dieser Feststellvorrichtung 5 ist in Figur 5 lediglich ein an der Sitzschiene O angeordneter Führungskörper 50 erkennbar, der drei Führungsöffnungen 51 zur längsverschieblichen Führung von Sperrelementen aufweist, die zur Arretierung der beiden Führungsschienen O, U dienen. Der Führungskörper 50 bildet ferner den Gegenanschlag 54, der mit einer der Anschlagflächen 24a, 24b des Verriegelungselementes 3 in Eingriff treten kann, um das Sitzgestell in einer als Memory-Position gespeicherten Sitzlängsposition anzuhalten.

Figur 7a zeigt eine schematische seitliche Schnittansicht der Memory-Baugruppe aus Figur 5 ohne den Auslösehebel 4, dafür aber zusammen mit der fahrzeugfest anzuordnenden Unterschiene U und der hierauf verschieblich gelagerten Sitzschiene O.

In die Unterschiene U ist eine Verriegelungsschiene integriert, die durch eine Mehrzahl in Schienenlängsrichtung L hintereinander angeordneter und durch Stege 112 voneinander getrennter Verriegelungsöffnungen 111 gebildet wird, in welche die in den Führungsöffnungen 51 des Führungskörpers 5 zu führenden Sperrzähne eingreifen können, um die Schienenlängsführung O, U in einer zuvor eingestellten Längsposition zu arretieren.

Dabei ist der durch die beiden in Schienenlängsrichtung L voneinander beabstandeten Rastzähne 26, 27 gebildete Eingriffsbereich des Verriegelungselementes 2 so ausgebildet, dass auch dieser Eingriffsbereich 26, 27 in die Verriegelungsöffnungen 111 der an der Unterschiene U ausgebildeten Verriegelungsschiene eingreifen kann, um die Memory-Baugruppe 1, 2 in einer definierten Längsposition zu verriegeln. Es werden also ein und dieselben Verriegelungsöffnungen 111 sowohl zur Arretierung der Schienenlängsführung O, U mittels am Führungskörper 50 geführter Sperrelemente als auch zur Verriegelung der Memory-Baugruppe 1, 2 mittels am Verriegelungselement vorgesehener Rastzähne 26, 27 genutzt.

In dem in Figur 7a gezeigten Zustand, der einer aufrechten, in Gebrauchsposition befindlichen Rückenlehne R (vergleiche Figur 9) entspricht, befinden sich die Rastzähne 26, 27 des Verriegelungselementes 2 jedoch nicht in Eingriff mit den Verriegelungsöffnungen 111 sondern sind vielmehr aus der Verriegelungsschlene 111, 112 ausgehoben. Dies ist darauf zurückzuführen, dass der Steuerhebel 3 mit der an einem Ende 32 seines Grundkörpers 30 ausgebildeten Steuerfläche derart auf eine zugeordnete Steuerfläche 22 des Verriegelungselementes 2 einwirkt, dass dieses in einer Schwenklage gehalten wird, in der die Rastzähne 26, 27 außer Eingriff mit der Verriegelungsschlene 111, 112 stehen.

Die Position des Steuerhebels 3, in der dieser mit der an einem Endabschnitt 32 ausgebildeten Steuerfläche auf die zugeordnete Steuerfläche 22 des Verriegelungselementes 2 einwirkt, entspricht der Normalposition bzw. normalen Schwenklage des Steuerhebels 3, in Richtung auf welche er mittels einer Feder (insbesondere Drehfeder) elastisch vorgespannt ist. In diesem Zustand greift der Steuerhebel 3 mit seinem mit der Steuerfläche versehenen Endabschnitt 32 an einem (durch eine Vertiefung des Grundkörpers 10 gebildeten) Mitnahmebereich 13 des Grundkörpers 10 des Gleiters 1 an, so dass bei einer Verschiebung des Sitzgestells mit in Gebrauchsposition befindlicher Rückenlehne entlang zumindest einer Raumrichtung x parallel zur Schienenlängsrichtung L der Gleiter 1 und damit die Memory-Baugruppe 1, 2 insgesamt durch den Steuerhebel 3 mitgenommen werden. Bei einer Verschiebung des Sitzgestells in entgegengesetzter Richtung -x parallel zur Schienenlängsrichtung L erfolgt die Mitnahme über einen separaten, sitzschienenfesten Mitnehmer 6, der hierbei auf einen entsprechenden Mitnahmeanschlag 23 des Verriegelungselementes 2 einwirkt.

Darüber hinaus dient der Mitnehmer 6 als redundantes Element bei der Mitnahme der Memory-Baugruppe 1, 2 entlang der Richtung x, die an sich mittels des Steuerhebels 3 erfolgen soll. Hierzu kann der Mitnehmer 6 mit einem entsprechenden Anschlag 16 des Gleiters 1 zusammenwirken.

Im Ergebnis wird bei in aufrechter Gebrauchsposition befindlicher Rückerilehne R (vergleiche Figur 9) die Memory-Baugruppe 1, 2 bei jeder Neueinstellung der Sitzlängsposition des Sitzgestells G über den Steuerhebel 3 und/oder den Mitnehmer 6 mitgenommen, so dass die durch die Lage der Memory-Baugruppe 1, 2 definierte Memory-Position jeweils an die aktuelle Komfortposition des Sitzgestells G in Schienenlängsrichtung L angepasst wird. Dies ist möglich, da das Verriegelungselement 2 bei in aufrechter Gebrauchsposition befindlicher Rückenlehne mittels des Steuerhebels 3 aus der zugeordneten Verriegelungsschiene 111, 112 ausgehoben ist.

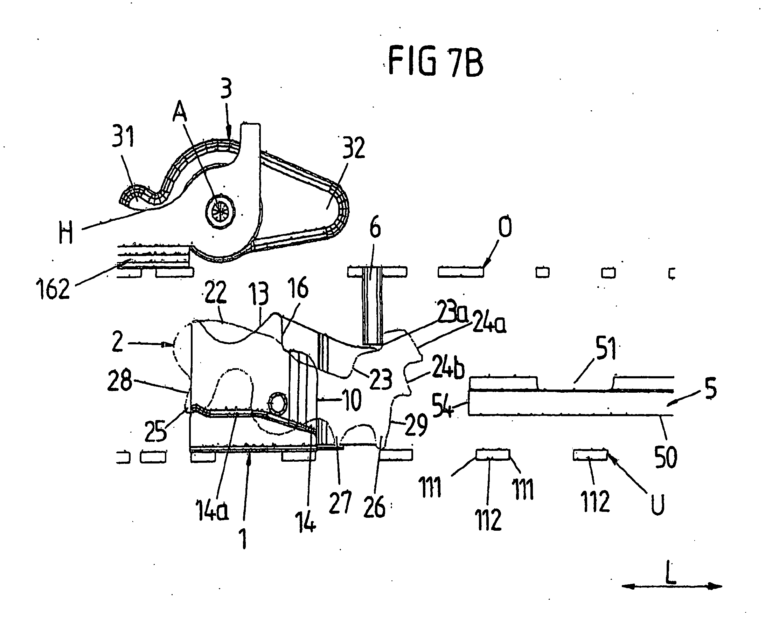

Figur 7b zeigt die Anordnung gemäß Figur 7a nach dem Vorklappen der Rückenlehne R in Richtung auf die Sitzfläche des Sitzgestells G. Hierbei wirkt der in Figur 5 dargestellte Bowdenzug 8 mit seinem Zugmittel 81 derart auf das zugeordnete Ende 31 des Steuerhebels 3 ein, dass dieser durch Verschwenken um seine Achse A (entgegen dem Uhrzeigersinn) außer Eingriff mit der Steuerfläche 22 des Verriegelungselementes 2 gebracht wird und nicht mehr auf dieses einwirkt. Hierdurch wird das Verriegelungselement unter der Wirkung der Vorspannung eines hierfür vorgesehenen (in den Figuren nicht dargestellten) elastischen Elementes derart (im Uhrzeigersinn) verschwenkt, dass der Eingriffsbereich 26, 27 des Verriegelungselementes 2 die Tendenz hat, in mindestens eine der Verriegelungsöffnungen 111 der Verriegelungsschiene 111, 112 einzugreifen. Dies ist jedoch in dem in Figur 7b gezeigten Zustand deshalb nicht möglich, weil sich die Memory-Baugruppe 1, 2 in einer Längsposition befindet, in der der eine Rastzahn 26 des Eingriffsbereiches 26, 27 am Rand einer der Öffnungen 111 aufschlägt.

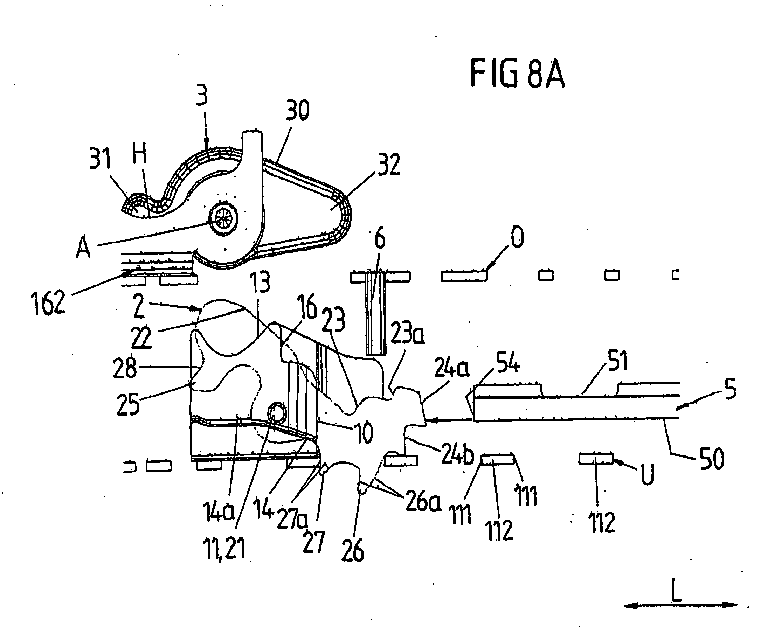

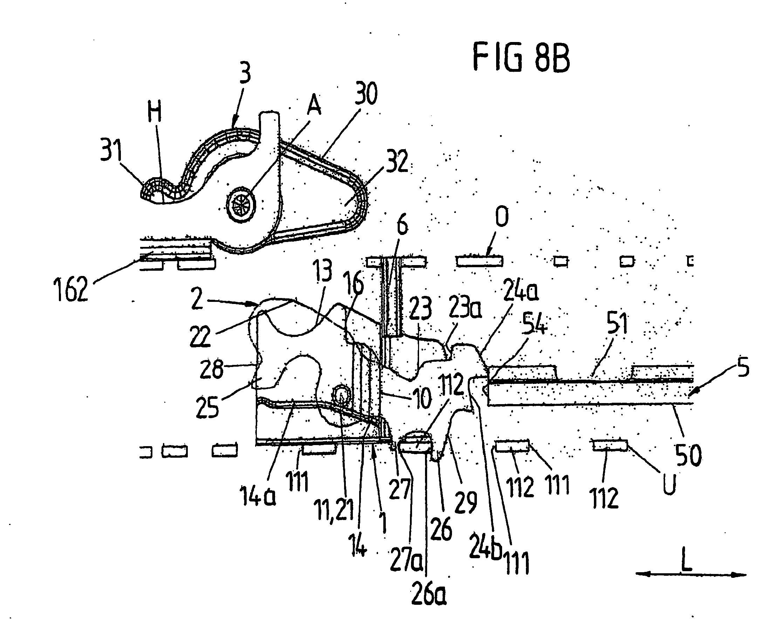

D. h., nach dem Vorklappen der Rückenlehne auf die Sitzfläche ist in diesem Fall die Memory-Baugruppe 1, 2 nicht sofort in Ihrer aktuellen Position verriegelt, da der Eingriffsbereich 26, 27 des Verriegelungselementes 2 noch auf einem Steg 112 der Verriegelungsschiene 111, 112 aufliegt. Allerdings befindet sich in diesem nicht vollständig eingerasteten Zustand des Verriegelungselementes 2 der Mitnehmer 6 noch in Anlage mit einem oberen Fortsatz 23a des zugeordneten Mitnahmeanschlages 23 des Verriegelungselementes 2. Hierdurch wird die Memory-Baugruppe 1, 2 bei der anschließenden Vorverlagerung des Sitzgestells G mit vorgeklappter Rückenlehne R über den sitzschienenfesten Mitnehmer 6 noch ein kleines Stück mitgenommen, bis der Eingriffsbereich 26, 27 vollständig in die nächstfolgende Verriegelungsöffnung 111 bzw. die nächstfolgenden Verriegelungsöffnungen 111 einrasten kann, wie anhand der Figuren 8a und 8b dargestellt. Die tatsächlich gespeicherte Memory-Position weicht dann nur geringfügig von der ursprünglichen Sitzlängsposition des Sitzgestells G ab.

Figur 8a zeigt eine Anordnung gemäß den Figuren 7a und 7b, wobei nun das Verriegelungselement 2 nach dem Vorklappen der Rückenlehne und dem Verschwenken des Steuerhebels 3 mit beiden Rastzähnen 26, 27 seines Eingriffsbereichs in eine einzelne Verriegelungsöffnung 111 der Verriegelungsschiene 111, 112 eingreift. Dabei liegen die konisch ausgebildeten Rastzähne 26, 27 mit jeweils einer ihrer schräg verlaufenden Rastflanken 26a, 27a am Rand der entsprechenden Verriegelungsöffnung 111 an, so dass eine spielfreie Verriegelung der Memory-Einrichtung sichergestellt ist.

In diesem Zustand dient die obere Anschlagfläche 24a des Verriegelungselementes 2 als Anschlag, mit dem der am schienenfesten Führungskörper 50 ausgebildete Gegenanschlag 54 beim Anfahren der Memory-Position (nach Ausüben der Easy-Entry-Funktion) in Eingriff treten kann, um das Sitzgestell erneut in seine ursprünglichen, als Memory-Position gespeicherten Sitzlängsposition anzuhalten. Die beim Anfahren der Memory-Position durch den Gegenanschlag 54 auf die zugeordnete Anschlagfläche 24a des Verriegelungselementes 2 ausgeübten Kräfte werden über den Grundkörper 20 des Verriegelungselementes 2 und dessen Eingriffsbereich 26, 27 unmittelbar in die Verriegelungsschiene 111, 112 abgeleitet, so dass der zur Lagerung des Verriegelungselementes 2 dienende Gleiter 1 sowie die zugeordnete Gleitführung 110 (vergleiche Figur 5) kostengünstig und gewichtsparend aus Kunststoff hergestellt werden können. Insbesondere wird nämlich durch die unmittelbare Einleitung der am Verriegelungselement 2 wirkenden Kräfte in die Verriegelungsschiene 111, 112 die am Grundkörper 10 des Gleiters 1 ausgebildete Lagerachse 11 für das Verriegelungselement 2 entlastet. Die verbleibenden Restkräfte, die dennoch am Gleiter 1 wirken, drücken diesen gegen die Verriegelungsschiene 111, 112, so dass auch diese Kräfte in die Verriegelungsschiene 111, 112 abgeleitet werden.

Aufgrund des geneigten Verlaufs der Anschlagfläche 24a bezüglich der Schienenlängsrichtung L (schräg in einem Winkel von weniger als 90°) wirkt der am Führungskörper 50 ausgebildete Gegenanschlag 54 zusätzlich einem Ausheben des Eingriffsbereiches 26, 27 des Verriegelungselementes 2 aus der zugeordneten Verriegelungsöffnung 111 entgegen.

Figur 8b zeigt in Abwandlung von Figur 8a eine Situation, in der das Verriegelungselement 2 mit seinem Eingriffsbereich 26, 27 in zwei Verriegelungsöffnungen 111 eingreift, nämlich mit jedem Rastzahn 26 und 27 in eine Verriegelungsöffnung, wobei der dazwischen liegende Steg 112 der Verriegelungsschiene 111, 112 überbrückt wird. Auch hier erfolgt die Verriegelung wiederum spielfrei durch die Anlage schräg verlaufender Rastflanken 26a, 27a der Rastzähne 26, 27 am Rand der jeweiligen Öffnung 111.

In diesem Zustand ist der Eingriffsbereich 26, 27 des Verriegelungselementes 2 weniger tief in die zugeordneten Rastöffnungen 111 eingetaucht als in dem in Figur 8a dargestellten Zustand, in dem der Eingriffsbereich 26, 27 in eine einzelne Verriegelungsöffnung 111 eingetaucht ist. Daher dient hier die zweite, untere Anschlagfläche 24b der beiden übereinander angeordneten Anschlagflächen 24a, 24b des Verriegelungselementes 2 zum Anhalten des Sitzgestells beim Erreichen der Memory-Position, indem der am Führungskörper 50 ausgebildete Gegenanschlag 54 mit jener untere Anschlagfläche 24b in Eingriff tritt.

Wie anhand Figur 8b erkennbar, sind die beiden Anschlagflächen 24a, 24b nicht nur senkrecht zur Schienenlängsführung L vertikal übereinander angeordnet, sondern auch in Schienenlängsrichtung L versetzt zueinander. Die räumliche Anordnung der beiden Anschlagflächen 24a, 24b ist so gewählt, dass sich der Führungskörper 50 beim Auftreffen seines Gegenanschlages 54 auf die jeweils aktive Anschlagfläche 24a oder 24b des Sperrelementes 2 jeweils in einer Position befindet, in der mindestens eines der in den Führungsöffnungen 51 des Führungskörpers 50 geführten Sperrelemente in eine zugeordnete Verriegelungsöffnung 111 der Verriegelungsschiene 111, 112 eingreifen kann. Im Ergebnis kann das Sitzgestell nach dem Anfahren der Memory-Position durch Hochklappen der Rückenlehne sofort in der erreichten Sitzlängsposition (Memory-Position) arretiert werden.

Im Übrigen weist auch die zweite, untere Anschlagfläche 24b des Sperrelementes 2 einen geneigten Verlauf bezüglich der Schienenlängsrichtung L auf, so dass der Gegenanschlag 54 die Tendenz hat, das Verriegetungsetement 2 im eingerasteten Zustand zu halten, wenn es an jener Anschlagfläche 24b anliegt.

Es wird nun Bezug genommen auf die Figuren 1a bis 1c, in denen perspektivisch eine Abwandlung und Weiterbildung einer Memory-Einrichtung der zuvor beschriebenen Art dargestellt ist und in denen ein Ausschnitt der Memory-Einrichtung in einem Zustand dargestellt ist, der einer hochgeklappten Rückenlehne eines zugeordneten Fahrzeugsitzes entspricht, also einem Zustand vor dem eventuellen Ausübung einer Memory-Funktion. Dabei sind zur einfacheren Erkennbarkeit des Zusammenhangs mit der in den Figuren 5 bis 8b dargestellten Anordnung übereinstimmende Bauteile jeweils mit denselben Bezugszeichen versehen. Hinsichtlich oder Erläuterung des Aufbaus und der Funktion dieser Bauteile wird dementsprechend auf die Ausführungen zu den Figuren 5 bis 8b Bezug genommen. Nachfolgend wird speziell auf diejenigen Aspekte der Figuren 1a bis 4 eingegangen, die deren Unterschied zu dem bekannten Aufbau einer Memory-Einrichtung charakterisieren.

Ein Unterschied der in den Figuren 1a bis 1c dargestellten Anordnung, verglichen mit der anhand der Figuren 5 bis 8b dargestellten, besteht darin, dass gemäß den Figuren 1a bis 1c der Steuerhebel 3 gleichzeitig als Mitnehmer dient, der hierzu in seiner Normallage (die einer hochgeklappten Rückenlehne entspricht) mit seinem als Steuerkontur ausgebildeten Ende 32 am Mitnahmeanschlag 23 des Verriegelungselementes 2 angreift und hierdurch als Mitnehmer wirkt, der bei einer Verstellung der Sitzlängsposition mit hochgeklappter Rückenlehne (also ohne Ausübung der Easy-Entry-Funktion) das Verriegelungselement 2 und den zugehörigen Gleiter 1 (vergleiche Figuren 5 bis 8b) mitnimmt.

Der wesentliche Unterschied zwischen der in den Figuren 5 bis 8b dargestellten Anordnung und der anhand der Figuren 1a bis 1c gezeigten liegt jedoch in der Kopplung zwischen dem durch eine Wippe 35 gebildeten Betätigungselement und dem nachgeordneten Steuerhebel 3. Diese Kopplung ist, wie nachfolgend beschrieben, derart, dass eine flexible Anpassung an eine Variation der Ausbildung und Anordnung der oberschienenseitigen Komponenten der Memory-Einrichtung (z. B. Steuerhebel 3 und Wippe 35) einerseits sowie der unterschienenseitigen Komponenten (z. B. Verriegelungselement 2) andererseits ermöglicht wird. Eine solche Variation, die selbst bei Kraftfahrzeugsitzen eines Fahrzeugtyps erforderlich sein kann, etwa um Bestimmungen unterschiedlicher Staaten Rechnung zu tragen, kann beispielsweise zur Folge haben, dass der Schwenkwinkel, den das Steuerelement 3 beim Freigeben des Verriegelungselementes 2 während des Vorklappens der Rückenlehne des Kraftfahrzeugsitzes zurücklegen soll, variiert. Hierzu wird nachfolgend eine Möglichkeit vorgeschlagen und erläutert, um den Schwenkwinkel des Steuerelementes 3 insoweit von dem Schwenkwinkel der über einen Kraftübertragungsmechanismus in Form eines Bowdenzugs 8 mit der Rückenlehne R in Verbindung stehenden Wippe 35 derart zu entkoppeln, dass ein durch Krafteinleitung am Bowdenzug 8 hervorgerufenes Verschwenken der Wippe 35 nicht zwingend zu einem Verschwenken des Steuerhebels 3 um denselben Winkel führt, sondern vielmehr um einen hiervon verschiedenen, den Gegebenheiten am jeweiligen Kraftfahrzeugsitz angepassten Drehwinkel. Dies wird erreicht durch eine Kopplung der Wippe 35 mit dem nachgeordneten Steuerhebel 3 über eine Federanordnung, wie nachfolgend beschrieben.

Gemäß den Figuren 1a bis 1c sind auf der feststehenden (körperlichen) Lagerachse A die mit der Seele (Zugmittel 81) des Bowdenzugs 8 verbundene Wippe 35 und der zur Betätigung des Verriegelungselementes 2 vorgesehene Steuerhebel 3 koaxial gelagert und auf einem hierfür vorgesehen (mit der Lagerachse A koaxialen), zylindrischen Lagerabschnitt 38 des Steuerhebels 3 wiederum zwei elastische Elemente (Federelemente) in Form von Schenkelfedern 101, 102 drehfest angeordnet.

Die erste Schenkelfeder 101 umfasst zwei freie Schenkel 101 a, 101 b, die entlang der in den Figuren 1a bis 1c durch einen Pfeil angedeuteten Drehrichtung D der Wippe 35 und des Steuerhebels 3 (unter Einwirkung einer Betätigungskraft durch den Bowdenzug 8) voneinander beabstandet sind und zwischen die sowohl der Steuerhebel 3 als auch die Wippe 35 mit je einem als Fortsatz 33 bzw. 36 ausgebildeten Abschnitt greifen. Hierdurch liegt jedem der beiden freien Schenkel 101a, 101b der ersten Schenkelfeder 101 je ein Betätigungsanschlag 33a bzw. 33b sowie 36a bzw. 36b des Fortsatzes 33 des Steuerhebels 3 einerseits und des Fortsatzes 36 der Wippe 35 andererseits gegenüber.

Die zweite, ebenfalls als Drehfeder ausgebildete Schenkelfeder 102 liegt mit ihrem einen freien Schenkel 102a an einem Betätigungsanschlag 34a an, der an einem zweiten Fortsatz 34 des Steuerhebels 3 ausgebildet ist, und mit ihrem zweiten freien Schenkel 102b an einem Endanschlag E, der an einem oberschienenfesten (also an der Oberschiene O festgelegten) Haltewinkel W vorgesehen ist. Hierdurch ist der Steuerhebel 3 mittels der zweiten Schenkelfeder 102 derart vorgespannt, dass er bei unbetätigtem Bowdenzug 8 (also bei nicht vorgeklappter Rückenlehne des zugehörigen Kraftfahrzeugsitzes) die in den Figuren 1a bis 1c dargestellte Normalposition (normale Schwenklage) einnimmt, in der er derart auf das Verriegelungselement 2 der zugehörigen Memory-Einrichtung einwirkt, dass dieses sich im entriegelten Zustand befindet. Ferner wirkt der Steuerhebel 3 vorliegend mit seiner Steuerkurve 33 derart mit einem Mitnahmebereich 23 des Verriegelungselementes 2 zusammen, dass er dieses bei einer Sitzlängsverstellung mit hochgeklappter Rückenlehne (Komfortverstellung des Kraftfahrzeugsitzes) mitnehmen kann. Gegebenenfalls kann diese Position noch dadurch gesichert sein, dass ein am zweiten Fortsatz 34 des Steuerhebels 3 ausgebildeter, der zweiten Schenkelfeder 102 abgewandter Anschlag 34b an einem zugeordneten, ortsfesten Gegenanschlag anliegt.

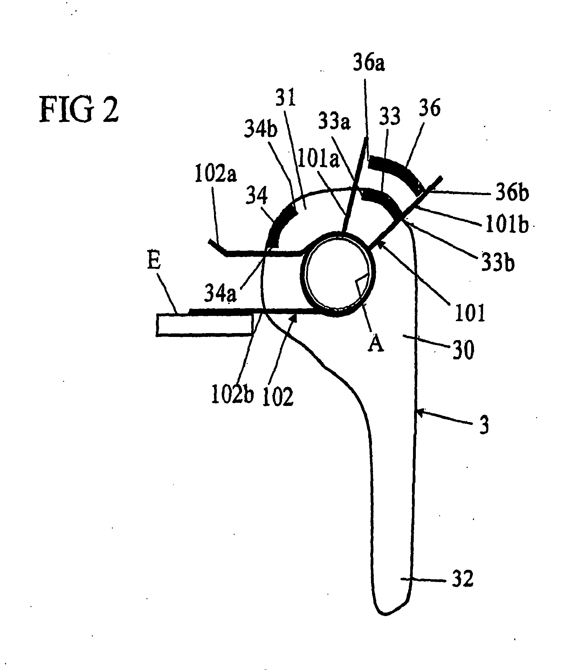

Die für die nachfolgende Beschreibung der Funktion der in den Figuren 1a bis 1c dargestellten Anordnung wichtigsten Komponenten, nämlich der Steuerhebel 3 mit seinem Lagerabschnitt 31, über den er schwenkbar auf der zugehörigen Lagerachse A gelagert ist, .sowie mit seinem eine Steuerkontur 32 bildenden Abschnitt, über den er auf ein nachfolgendes Verriegelungselement einwirken kann; die beiden steuerhebelseitigen Fortsätze 33, 34 und der wippenseitige Fortsatz 36; sowie ferner die beiden Schenkelfedern 101, 102 sind schematisch zusätzlich Figur 2 dargestellt.

Wird ausgehend von dem in den Figuren 1a bis 1c sowie 2 dargestellten Zustand zur Ausübung einer Easy-Entry-Funktion die Rückenlehne in Richtung auf die Sitzfläche des entsprechenden Kraftfahrzeugsitzes vorgeklappt oder ein sonstiger Betätigungsmechanismus, z. B. in Form eines an der Rückenlehne vorgesehenen Lehnenhebels, aktiviert, so führt dies zur Einleitung einer Verstellkraft in den Bowdenzug 8, welcher hierdurch über sein Zugmittel 81 eine Zugkraft auf die Wippe 35 ausübt, so dass diese (entgegen dem Uhrzeigersinn) um die gemeinsame Lagerachse A des Steuerhebels 3 und der Wippe 35 verschwenkt wird. Hierbei wirkt die Wippe mit dem in Drehrichtung D vorderen Betätigungsanschlag 36a ihres Fortsatzes 36 auf den in Drehrichtung D vorderen freien Schenkel 101a der ersten Schenkelfeder 101 ein, wodurch diese tendenziell entgegen ihrer Vorspannung in Richtung auf einen aufgespreizten Zustand verspannt wird Dies führt wiederum zu einer erhöhten Krafteinwirkung des in Drehrichtung D hinteren freien Schenkels 101b der ersten Schenkelfeder 101 auf den in Drehrichtung D hinteren Betätigungsanschlag 33b des zugeordneten ersten steuerhebelseitigen Fortsatzes 33. Das von dem in Drehrichtung D hinteren freien Schenkel 101b der ersten Schenkelfeder 101 auf den in Drehrichtung D hinteren Betätigungsanschlag 33b des steuerhebelseitigen Fortsatzes 33 ausgeübte Moment wächst mit zunehmender Verspannung der ersten Schenkelfeder 101 während der Einwirkung des wippenseitigen Fortsatzes 36 mit seinem in Drehrichtung D vorderen Betätigungsanschlag 36a auf den in Drehrichtung D vorderen freien Schenkel 101a der ersten Schenkelfeder 101. Wenn dieses Moment, welches die Tendenz hat, den Steuerhebel 3 gemeinsam mit der Wippe 35 (entgegen dem Uhrzeigersinn) zu verschwenken, schließlich so groß ist, dass es das von der zweiten Schenkelfeder, welche die Tendenz hat, den Steuerhebel 3 in der in den Figuren 1a bis 1c und 2 gezeigten Normalposition zu halten, ausgeübte Moment übertrifft, so wird schließlich der Steuerhebel 3 von der Wippe 35 entlang der gemeinsamen Drehrichtung D mitgenommen, und zwar unter zunehmender Deformation der zweiten Schenkelfeder 102.

D. h., die Vorspannung der ersten Schenkelfeder 101 einerseits und der zweiten Schenkelfeder 102 andererseits ist derart aufeinander abgestimmt, dass eine Drehbewegung des Steuerhebels 3 erst dann beginnt, wenn in der ersten Schenkelfeder 101 durch Einwirkung des wippenseitigen Fortsatzes 36 zusätzliche Spannung aufgebaut worden ist. Vor Einwirkung der Wippe 35 auf die erste Schenkelfeder 101 ist somit die Vorspannung der ersten Schenkelfeder 101 geringer als die Vorspannung der zweiten Schenkelfeder 102, welche die Tendenz hat, den Steuerhebel 3 in die in den Figuren 1a bis 1 c und 2 gezeigte Normalposition zu bringen, in der er in der beschriebenen Weise auf das Verriegelungselement 2 einwirkt.

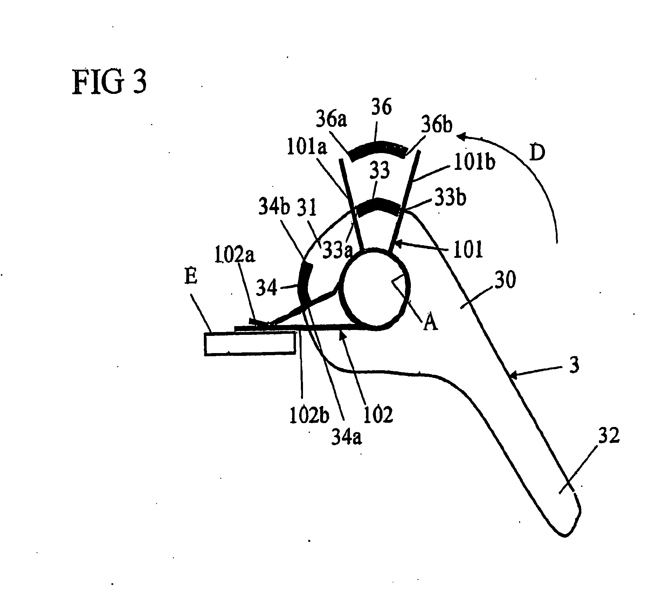

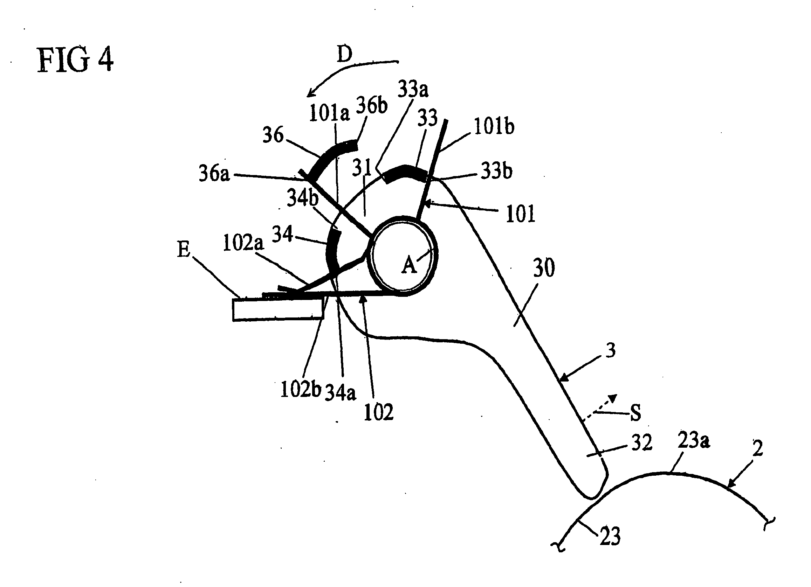

Andererseits ist die Federkonstante der ersten Schenkelfeder 101 größer als die Federkonstante der zweiten Schenkelfeder 102, so dass eine substantielle Verformung, d. h. Aufspreizung der ersten Schenkelfeder 101 erst dann erfolgt, wenn die zweite Schenkelfeder 102 in erheblichem Umfang deformiert (zusammengedrückt) worden ist, wie nachfolgend anhand der Figuren 3 und 4 im Einzelnen erläutert werden wird.

Figur 3 zeigt schließlich einen Zustand der in den Figuren 1a bis 1 c und 2 dargestellten Anordnung in schematischer Weise, indem der Steuerhebel 3 unter Einwirkung der ersten Schenkelfeder 101 soweit entlang der gemeinsamen Drehrichtung D des Steuerhebels 3 und der Wippe 35 verschwenkt worden ist, dass einer weiteren Schwenkbewegung des Steuerhebels 3 entlang der Drehrichtung D der oberschienenseitige Endanschlag E entgegensteht, an dem die durch Einwirkung des zweiten Fortsatzes 34 des Steuerhebels 3 deformierte zweite Schenkelfeder 102 nun mit beiden Schenkeln 102a, 102b anliegt. Hiermit ist die Schwenkbewegung des Steuerhebels 3 um die zugeordnete Lagerachse A (bei einem Schwenkwinkel von vorliegend etwa 28°) im Wesentlichen beendet. Der Steuerhebel 3 ist dann von dem in den Figuren 1a bis 1c dargestellten Verriegelungselement 2 der Memory-Einrichtung abgehoben, so dass dieses zur Verriegelung der aktuellen Sitzlängsposition als Memory-Position in eine zugeordnete Verriegelungsstelle eingreifen kann, wie weiter oben anhand der Figuren 5 bis 8b beschrieben. (In diesem Zustand ist die Schwenkbewegung des Steuerhebels 3 nicht vollständig gestoppt, da noch eine geringe Restdeformation der zweiten Schenkelfeder 102 möglich ist. Es handelt sich hierbei aber um eine im Wesentlichen vernachlässigbare Restbewegung des Steuerhebels 3.)

Der in Figur 3 dargestellte Zustand des Steuerhebels 3 und des wippenseitigen Anschlages 36 entspricht jedoch noch nicht der vollständig auf die Sitzfläche vorgeklappten Rückenlehne bzw. einem vollständig betätigten Lehnenhebel. Vielmehr wurde die Schwenkbewegung des Steuerhebels 3 vorzeitig durch den hierfür vorgesehenen Endanschlag E begrenzt und hierdurch auf einen definierten Schwenkwinkel (von vorliegend etwa 28°) beschränkt.

Die Wippe 35 (vergleiche Figuren 1a bis 1c) sowie der zugehörige wippenseitige Fortsatz 36 bewegen sich demgegenüber beim weiteren Vorklappen der Rückenlehne auf die Sitzfläche bzw. weiterer Betätigung eines zur Auslösung der Easy-Entry-Funktion vorgesehenen Lehnenhebels unter fortdauernder Krafteinwirkung über den Bowdenzug 8 bzw. dessen Zugmittel 81 in Drehrichtung D fort, wie in Figur 4 dargestellt. Diese weitere Drehbewegung der Wippe 35 führt zu einer zunehmenden Aufspreizung der freien Schenkel 101a, 101b der ersten Schenkelfeder 101, jedoch nicht zu einer weiteren gleichsinnigen (substanziellen) Drehbewegung des Steuerhebels 3, der ja an einer weiteren Drehbewegung entlang der Drehrichtung D durch den hierfür vorgesehenen Endanschlag E gehindert wird, an dem er mittels seines zweiten Fortsatzes 34 über die unter Krafteinwirkung deformierte zweite Schenkelfeder 102 anliegt. Im Ausführungsbeispiel entspricht der gesamte von der Wippe 35 bzw. deren Fortsatz 36 beim Auslösen der Easy-Entry-Funktion durchlaufende Winkel etwa 60°, also etwas mehr als das Doppelte des Schwenkwinkels, den der Steuerhebel 3 zurückgelegt hat.

In dem in Figur 4 gezeigten Zustand befindet sich der Steuerhebel 3 mit seinem eine Steuerkontur 32 bildenden Endabschnitt noch im Eingriff mit einem oberen Endabschnitt 23a des Mitnahmebereiches 23 des Verriegelungselementes 2. Für den Fall, dass in der aktuellen Sitzlängsposition, in der durch Vorklappen der Rückenlehne die Easy-Entry-Funktion ausgelöst wurde, kein Einrasten des Verriegelungselementes 2 in eine zugeordnete Verriegelungsöffnung der Verriegelungsschiene möglich sein sollte, wird daher das Verriegelungselement 2 bei einem Vorverlagem des Sitzes mit vorgeklappter Rückenlehne noch ein stückweit mitgenommen, bis es in die in Bewegungsrichtung des Sitzes nächstgelegene Verriegelungsöffnung einrastet. Eine weitere Verschiebung des Verriegelungselementes 2 zusammen mit dem Fahrzeugsitz ist dann nicht mehr möglich und durch den Eingriff des Verriegelungselementes 2 in die zugeordnete Verriegelungsöffnung ist die aktuelle Sitzlängsposition als Memory-Position für ein Wiederauffinden nach Ausüben der Easy-Entry-Funktion gespeichert.

In diesem Zustand steht der weiteren Vorverlagerung des Sitzes mit vorgeklappter Rückenlehne durch eine Bedienperson zunächst noch die Tatsache entgegen, dass sich der Steuerhebel 3 mit seinem als Steuerkontur 32 ausgebildeten Endabschnitt am oberen Ende 23a des Mitnahmebereichs 23 des Verriegelungselementes 2 abstützt. Der Steuerhebel 3 wirkt dabei über den der zweiten Schenkelfeder 102 zugeordneten Betätigungsanschlag 34a auf deren hinteren freien Schenkel 102a ein, um diesen zu deformieren. Unter der Wirkung der hierbei auftretenden Kräfte kommt es zu einer Deformation des einen freien Schenkels 102a der zweiten Schenkelfeder 102, die eine weitere Schwenkbewegung S des Steuerhebels 3 (wie in Figur 4 gestrichelt angedeutet) in Drehrichtung D um einige wenige Grad ermöglicht. Hierdurch wird der Steuerhebel 3 mit seinem als Steuerkontur 32 ausgebildeten Endabschnitt endgültig von dem Verriegelungselement 2 abgehoben, so dass dieses einer weiteren Vorverlagerung des entsprechenden Fahrzeugsitzes zur Ausübung der Easy-Entry-Funktion nicht mehr entgegensteht.

Die Federkonstante des einen (hinteren) freien Schenkels 102a der zweiten Schenkelfeder 102 ist dabei so gewählt, dass diese deutlich größer ist als die Federkonstanten der beiden Schenkeifedem 101, 102 (bezogen auf ein Aufweiten der ersten Schenkelfeder 101 bzw. ein Zusammendrücken der zweiten Schenkelfeder 102), so dass die letzte, geringfügige Schwenkbewegung S des Steuerhebels 3 um einige wenige Grad, beispielsweise etwa 5°, erst dann erfolgt, wenn das Zusammendrücken der zweiten Schenkelfeder 102, wie in Figur 3 dargestellt, und das Aufweiten der ersten Schenkelfeder 101, wie in Figur 4 dargestellt, abgeschlossen sind, wobei der Steuerhebel 3 einen Schwenkwinkel von insgesamt etwa 60° zurücklegte.

Wird nach Abschluss der Verriegelung der Memory-Einrichtung der Fahrzeugsitz in Sitzlängsrichtung L vorverlagert, so kann der Steuerhebel 3 in bekannter Weise mit einem als Steuerkontur 32 ausgebildeten Endabschnitt eine zugeordnete Steuerkurve überfahren.

Im Ergebnis eröffnet somit die vorstehend anhand der Figuren 1a bis 4 beschriebene Kopplung der Wippe 35 mit dem nachgeordneten Steuerhebel 3 unter zusätzlicher Verwendung eines Anschlages E, der eine Schwenkbewegung des Steuerhebels 3 beim Verschwenken der Wippe 35 begrenzt, die Möglichkeit, dass bei einem Verschwenken der Wippe 35 um einen definierten Winkel (vorliegend etwa 60°), bewirkt durch die Auslösung der Easy-Entry-Funktion, ein hiervon abweichender, deutlich geringerer Schwenkwinkel des nachgeschalteten Steuerhebels 3 (von vorliegend etwa 28°) auftritt. Diese Winkeldifferenz zwischen dem maximalen Schwenkwinkel der Wippe 35 einerseits und dem Steuerhebel 3 andererseits wird ohne Zwischenschaltung eines Getriebes oder dergleichen erreicht, sondern lediglich unter Verwendung einer zwei Schenkelfedern 101, 102 umfassenden Federanordnung.

Hierdurch kann bei unveränderter Konfiguration des als Kraftübertragungsmechanismus von der Rückenlehne her dienenden Bowdenzugs 8 und der Wippe 35 der Schwenkwinkel des Steuerhebels 3 beim Auslösen der Easy-Entry-Funktion gezielt so eingestellt werden, wie es der jeweiligen Fahrzeugumgebung des Steuerhebels 3 entspricht.

So führt etwa ein reduzierter Schwenkwinkel des Steuerhebels 3 dazu, dass ein Fenster F in der Oberschiene O (vergleiche Figur 1a), durch das der Steuerhebel 3 in den Raum zwischen Oberschiene und Unterschiene greift, wo sich die Memory-Einrichtung, insbesondere deren Verriegelungselement 2, befindet, in Schienenlängsrichtung L kleiner ausgerührt sein kann. Insgesamt ermöglicht ein reduzierter Schwenkwinkel des Steuerhebels 3 die Ausbildung der Easy-Entry-Funktion auf einem reduzierten Bauraum.

Wird der Fahrzeugsitz nach Ausübung der Easy-Entry-Funktion und der hiermit verbundenen Vorverlagerung wieder in seine ursprüngliche Position zurückgeschoben, in der er mittels der Memory-Einrichtung angehalten wird und befindet sich die Rückenlehne schließlich wieder in ihrer aufrechten Position, so kann der Steuerhebel 3 (zusammen mit der Wippe 35) unter der Wirkung der zweiten Schenkelfeder 102 wieder die in den Figuren 1a bis 1c dargestellte Normalposition einnehmen, in der er auf das Verriegelungselement 2 einwirkt.

## Patentansprüche

1. Verstelleinrichtung für ein Kraftfahrzeug, die eingerichtet und vorgesehen ist zum Betätigen eines Kraftfahrzeugteiles, mit
- einem schwenkbar gelagerten Betätigungselement (35),
- einem Kraftübertragungsmechanismus, mit dem eine Verstellkraft in das Betätigungselement (35) einleitbar ist, so dass dieses verschwenkt wird, und
- einem mit dem Betätigungselement (35) gekoppelten, schwenkbar gelagerten Steuerelement (3), dass mit einem nachgeordneten Verstellteil zusammenwirken kann,
wobei dem Steuerelement (3) ein Endanschlag (E) zugeordnet ist, der den maximalen Schwenkwinkel des Steuerelementes (3) begrenzt, und das Betätigungselement (35) auf das Steuerelement (3) über ein erstes elastisches Element (101) derart einwirkt, dass das Steuerelement (3) bei einer Schwenkbewegung des Betätigungselementes (35) mitgenommen wird und das Betätigungselement (35) seine Schwenkbewegung unter Deformation des ersten elastischen Elementes (101) fortsetzen kann, wenn eine weitere Schwenkbewegung des Steuerelementes (3) durch den Endanschlag (E) verhindert wird,
**dadurch gekennzeichnet, dass**
das Steuerelement (3) über ein zweites elastisches Element (102) mit dem Endanschlag (E) in Wirkverbindung steht.

2. Verstelleinrichtung nach Anspruch 1, **dadurch gekennzeichnet, dass** das Betätigungselement (35) und das Steuerelement (3) koaxial gelagert sind.

3. Verstelleinrichtung nach Anspruch 1 oder 2, **dadurch gekennzeichnet, dass** das zweite elastische Element (102) bei einer Schwenkbewegung des Steuerelementes (3) deformiert wird, bis der Endanschlag (E) zusammen mit dem deformierten zweiten elastischen Element (102) einer weiteren Schwenkbewegung des Steuerelementes (3) entgegensteht.

4. Verstelleinrichtung nach einem der vorhergehenden Ansprüche, **dadurch gekennzeichnet, dass** das zweite elastische Element (102) das Steuerelement (3) in eine Normalposition vorspannt.

5. Verstelleinrichtung nach Anspruch 4, **dadurch gekennzeichnet, dass** das zweite elastische Element (102) das Steuerelement (3) gegen einen Gegenanschlag vorspannt.

6. Verstelleinrichtung nach einem der vorhergehenden Ansprüche, **dadurch gekennzeichnet, dass** das zweite elastische Element (102) durch eine zwei freie Schenkel (102a, 102b) aufweisende Schenkelfeder gebildete wird, von denen ein Schenkel (102a) am Steuerelement (3) und der andere Schenkel (102b) am Endanschlag (E) anliegt und sich abstützt.

7. Verstelleinrichtung nach einem der vorhergehenden Ansprüche, **dadurch gekennzeichnet, dass** das zweite elastische Element (102) auf dem Steuerelement (3) gelagert ist.

8. Verstelleinrichtung nach einem der vorhergehenden Ansprüche, **dadurch gekennzeichnet, dass** das erste elastische Element (101) durch eine Schenkelfeder mit zwei freien Schenkeln (101a, 101b) gebildet wird.

9. Verstelleinrichtung nach Anspruch 8, **dadurch gekennzeichnet, dass** das Betätigungselement (35) bei einer Drehbewegung auf einen freien Schenkel (101a) des ersten elastischen Elementes (101) einwirkt und dass der andere freie Schenkel (101b) des elastischen Elementes (101) hierbei auf das Steuerelement (3) einwirkt.

10. Verstelleinrichtung nach Anspruch 8 oder 9, **dadurch gekennzeichnet, dass** das Betätigungselement (35) bei einer durch Krafteinleitung in das Betätigungselement (35) ausgelösten Drehbewegung auf einen in Drehrichtung (D) vorderen Schenkel (35) ausgelösten Drehbewegung auf einen in Drehrichtung (D) vorderen Schenkel (101a) des ersten elastischen Elementes (101) einwirkt und dass das Steuerelement (3) durch einen in Drehrichtung (D) hinteren Schenkel (101b) des ersten elastischen Elementes (101) mitgenommen wird.

11. Verstelleinrichtung nach einem der Ansprüche 8 bis 10, **dadurch gekennzeichnet, dass** das erste elastische Element (101) als eine Drehfeder ausgebildet ist.

12. Verstelleinrichtung nach einem der Ansprüche 8 bis 11, **dadurch gekennzeichnet, dass** zwischen den freien Schenkeln (101a, 101b) des ersten elastischen Elementes (101) jeweils ein Abschnitt (33, 36) des Steuerelementes (3) einerseits und des Betätigungselementes (35) andererseits angeordnet ist, der jeweils auf mindestens einen der freien Schenkel (101a, 101b) einwirken kann.

13. Verstelleinrichtung nach einem der vorhergehenden Ansprüche, **dadurch gekennzeichnet, dass** das erste elastische Element (101) auf dem Steuerelement (3) gelagert ist.

14. Verstelleinrichtung nach einem der vorhergehenden Ansprüche, **dadurch gekennzeichnet, dass** der Kraftübertragungsmechanismus (8) ein längserstrecktes Kraftübertragungselement (81) umfasst, das an dem Betätigungselement (35) angreift.

15. Verstelleinrichtung nach Anspruch 14, **dadurch gekennzeichnet, dass** das längserstreckte Kraftübertragungselement (81) als ein Zugmittel ausgebildet ist.

16. Verstelleinrichtung nach Anspruch 15, **dadurch gekennzeichnet, dass** das Zugmittel (81) die Seele eines Bowdenzugs (8) bildet.

17. Verstelleinrichtung nach einem der vorhergehenden Ansprüche, **dadurch gekennzeichnet, dass** bei Nichteinleitung einer Kraft über den Kraftübertragungsmechanismus (8) in das Betätigungselement (35) das Steuerelement (3) mittels des zweiten elastischen Elementes (102) in eine Normalposition vorgespannt ist.

18. Verstelleinrichtung nach einem der vorhergehenden Ansprüche, **dadurch gekennzeichnet, dass** das Steuerelement (3) mit einem nachgeordneten Verstellteil (2) eines Kraftfahrzeugs zusammenwirkt

19. Verstelleinrichtung nach Anspruch 18, **dadurch gekennzeichnet, dass** das Steuerelement (3) mit dem nachgeordneten Verstellteil (2) durch Verschwenken in und außer Eingriff bringbar ist.

20. Verstelleinrichtung nach Anspruch 18 oder 19, **dadurch gekennzeichnet, dass** das Verstellteil (2) einem verstellbaren Kraftfahrzeugsitz (G, R) zugeordnet ist

21. Verstelleinrichtung nach einem der Ansprüche 18 bis 20, **dadurch gekennzeichnet, dass** das Verstellteil (2) ein Verriegelungselement einer Memory-Einnchtung (1, 2) bildet, mit der eine Sitzlängsposition eines Kraftfahrzeugsitzes (G, R) speicherbar ist, indem das Verriegelungselement (2) in eine der Sitzlängsposition entsprechende Verriegelungsstelle (111) eingreift.

22. Verstelleinrichtung nach Anspruch 21, **dadurch gekennzeichnet, dass** das Verriegelungselement (2) durch Verschwenken des Betätigungselementes (35) mit der mindestens einen Verriegelungsstelle (111) in und außer Eingriff bringbar ist.

23. Verstelleinrichtung nach Anspruch 4 oder 5 und einem der Ansprüche 18 bis 22, **dadurch gekennzeichnet, dass** das Steuerelement in dem Zustand, in dem es sich unter der Wirkung des zweiten elastischen Elementes (102) in seiner Normalposition befindet, auf einen Mitnahmebereich (23) des nachgeordneten Verstellteiles (2) einwirkt, so dass das Verstellteil (2) bei einer Bewegung des Steuerelementes (3) in Verstellrichtung (L) der Verstelleinrichtung mitgenommen werden kann.

24. Verstellrichtung nach einem der vorhergehenden Ansprüche, **dadurch gekennzeichnet, dass** zwischen dem Endanschlag (E) und dem Steuerelement (3) ein zusätzliches elastisches Mittel (102a) wirkt, das eine geringfügige, zusätzliche Bewegung des Steuerelementes (3) ermöglicht, wenn die Deformation des ersten elastischen Elementes (101) angeschlossen ist.

25. Verstelleinrichtung nach Anspruch 24, **dadurch gekennzeichnet, dass** das zusätzliche elastische Mittel durch einen Teilbereich (102a) des zweiten elastischen Elementes (102) gebildet wird.

26. Verstelleinrichtung nach Anspruch 6 und 25, **dadurch gekennzeichnet, dass** das zusätzliche elastische Mittel durch einen deformierbaren freien Schenkel (102a) des zweiten elastischen Elementes (102) gebildet wird.

27. Verstelleinrichtung nach einem der vorhergehenden Ansprüche, **dadurch gekennzeichnet, dass** der Kraftübertragungsmechanismus (8) mit der vorklappbaren Rückenlehne (R) eines Kraftfahrzeugsitzes (G, R) gekoppelt ist, so dass durch Vorklappen der Rückenlehne (R) eine Verstellkraft in das Betätigungselement (35) eingeleitet werden kann, um dieses zu verschwenken.

28. Kraftfahrzeugsitz mit
- einem Sitzgestell (G),
- einer Rückenlehne (R), die schwenkbar am Sitzgestell (G) gelagert und in Richtung auf eine Sitzfläche des Sitzgestells vorklappbar ist,
- einer Schienenlängsführung (101, 102), mit der das Sitzgestell (G) zur Einstellung der Sitzlängsposition in Schienenlängsrichtung (L) bewegbar ist,
- einer Feststellvrrichtung (5) zum Arretieren der Schienenlängsführung in einer zuvor eingestellten Sitzlängsposition,
- einem Koppelmechanismus (7), der die Feststellvorrichtung (5) entriegelt, wenn die Rückenlehne (R) auf die Sitzfläche vorgeklappt ist,
- einer Memory-Einrichtung, mittels der das Sitzgestell bei einer Bewegung in Schienenlängsrichtung (L) automatisch in einer vorgebbaren, als Memory-Position definierten Sitzlängsposltlon angehalten werden kann,
- einer Verriegelungsvorrichtung der Memory-Einrichtung zum Verriegeln einer eingestellten Memory-Position und
- einer Verstellelnrichtung zur Betätigung eines Verstellteiles (2) der Verriegelungsvorrichtung, die einen einerseits mit der vorklappbaren Rückenlehne (R) und andererseits mit einem Betätigungselement (35) gekoppelten Kraftübertragungsmechanismus (8) sowie ein durch das Betätigungselement (35) betätigbares Steuerelement (3) aufweist,
**gekennzeichnet durch**
eine Ausbildung der Verstelleinrichtung nach einem der vorhergehenden Ansprüche.

## Claims

1. Adjusting device for a motor vehicle which is designed and provided for actuation of a motor vehicle member, comprising
- a swivel-mounted actuation element (35),
- a power transmission mechanism with which a adjusting force may be applied to the actuation element (35) so that it is swiveled, and
- a swivel-mounted control element (3) being coupled with the actuation element (35) and being able to cooperate with a downstream adjusting member,
wherein an end stop (E) is associated with the control element (3), which end stop limits the maximum swivel angle of the control element (3), and the actuation element (35) acts on the control element (3) via a first elastic element (101) in such a way that the control element (3) is entrained upon a swivel movement of the actuation element (35) and the actuation element (35) may continue its swivel movement under deformation of the first elastic element (101) when a further swivel movement of the control element (3) is prevented by the end stop (E),
**characterized in that**
the control element (3) is operatively connected to the end stop (E) via a second elastic element (102).

2. Adjusting device according to claim 1, **characterized in that** the actuation element (35) and the control element (3) are mounted coaxially.

3. Adjusting device according to claim 1 or 2, **characterized in that** the second elastic element (102), upon a swivel movement of the control element (3), is deformed until the end stop (E) together with the deformed second elastic element (102) inhibits a further swivel movement of the control element (3).

4. Adjusting device according to anyone of the preceding claims, **characterized in that** the second elastic element (102) pretensions the control element (3) towards a normal position.

5. Adjusting device according to claim 4, **characterized in that** the second elastic element (102) pretensions the control element (3) against a counter stop.

6. Adjusting device according to anyone of the preceding claims, **characterized in that** the second elastic element (102) is formed by a leg spring having two free legs (102a, 102b) of which one leg (102a) abuts on and is supported by the control element (3) and the other leg (1 02b) abuts on and is supported by the end stop (E).

7. Adjusting device according to anyone of the preceding claims, **characterized in that** the second elastic element (102) is mounted on the control element (3).

8. Adjusting device according to anyone of the preceding claims, **characterized in that** the first elastic element (101) is formed by a leg spring having two free legs (101a, 101b).

9. Adjusting device according to claim 8, **characterized in that** the actuation element (35) acts on a free leg (101 a) of the first elastic element (101) and that the other free leg (101b) of the elastic element (101) in this case acts on the control element (3).

10. Adjusting device according to claim 8 or 9, **characterized in that** the actuation element (35), upon a pivotal movement caused by application of force into the actuation element (35), acts on a, in direction of rotation (D), front leg (101a) of the first elastic element (101) and that the control element (3) is entrained by a, in direction of rotation (D), rear leg (101b) of the first elastic element (101).

11. Adjusting device according anyone of the claims 8 to 10, **characterized in that** the first elastic element (101) is designed as a torsion spring.

12. Adjusting device according to anyone of the claims 8 to 11, **characterized in that** a section (33, 36), on the one hand of the control element (3), and, on the other hand, of the actuation element (35) is respectively arranged between the free legs (101a, 101b) of the first elastic element (101), which section may respectively act on at least one of the free legs (101a, 101b).

13. Adjusting device according to anyone of the preceding claims, **characterized in that** the first elastic element (101) is mounted on the control element (3).

14. Adjusting device according to anyone of the preceding claims, **characterized in that** the power transmission mechanism (8) comprises an elongate power transmission element (81), engaging on the actuation element (35).

15. Adjusting device according to claim 14, **characterized in that** the elongate power transmission element (81) is formed as a traction means.

16. Adjusting device according to claim 15, **characterized in that** the traction means (81) forms the core of a bowden cable (8).

17. Adjusting device according to anyone of the preceding claims, **characterized in that** the control element (3) is pretensioned towards a normal position by means of the second elastic element (102) when a force is not applied into the actuation element (35) via the power transmission mechanism (8).

18. Adjusting device according to anyone of the preceding claims, **characterized in that** the control element (3) cooperates with a downstream adjusting member (2) of a motor vehicle.

19. Adjusting device according to claim 18, **characterized in that** the control element (3) may be brought by swiveling in and out of engagement with the downstream adjusting member (2).

20. Adjusting device according to claim 18 or 19, **characterized in that** the adjusting member (2) is associated with a displaceable motor vehicle seat (G, R).

21. Adjusting device according to anyone of the claims 18 to 20, **characterized in that** the adjusting member (2) forms a locking element of a memory device (1, 2) with which a longitudinal seat position of a motor vehicle seat (G, R) is storable by the latching element (2) engaging in a locking location (111) corresponding to the longitudinal seat position.

22. Adjusting device according to claim 21, **characterized in that** the locking element (2) may be brought in and out of engagement with the at least one locking location (111) by swiveling the actuation element (35).

23. Adjusting device according to claim 4 or 5 and anyone of the claims 18 to 22, **characterized in that** the control element, in the state in which it is under the influence of the second elastic element (102) in its normal position, acts on an entraining section (23) of the downstream adjusting member (2) so that the adjusting member (2) may be entrained upon a movement of the control element (3) in direction of displacement (L) of the displacement device.

24. Adjusting device according to anyone of the preceding claims, **characterized in that** between the end stop (E) and the control element (3) an additional elastic means (102a) is effective, which allows for a slight additional movement of the control element (3) when the deformation of the first elastic element (101) is completed.

25. Adjusting device according to claim 24, **characterized in that** the additional elastic means is formed by a portion (102a) of the second elastic element (102).

26. Adjusting device according to claims 6 and 25, **characterized in that** the additional elastic means is formed by deformable free leg (1 02a) of the second elastic element (102).

27. Adjusting device according to anyone of the preceding claims, **characterized in that** the power transmission mechanism (8) is coupled with the foldable backrest (R) of a motor vehicle seat (G, R) so that by folding forward of the backrest (R) an adjusting force may be applied to the actuation element (35) in order to swivel it.

28. Motor vehicle seat comprising
- a seat frame (G),
- a backrest (R) which is swivel-mounted at the seat frame (G) and which may folded forwards towards a seat surface of the seat frame,
- a longitudinal rail guide (101, 102) with which the seat frame (G), for adjustment of the longitudinal seat position, is moveable in longitudinal direction of the rail(s) (L),
- a fixing device (5) for arresting the longitudinal rail guide in a pre-set longitudinal seat position,
- a coupling mechanism (7) which unlocks the fixing device (5) when the backrest (R) is folded forward onto the seat surface,
- a memory device by means of which the seat frame, upon a movement in longitudinal direction of the rail(s) (L), is automatically stopped in a pre-settable longitudinal seat position being defined as a memory position,
- a locking device of the memory device for locking the set memory position, and
- an adjusting device for actuation of a adjusting member (2) of the locking device which comprises a power transmission mechanism (8), which is coupled, on the one hand, with the foldable backrest (R) and, on the other hand, with an actuation element (35), and a control element (3), which may be actuated via the actuation element (35)
**characterized by**
a formation of the adjusting device according to anyone of the preceding claims.

## Revendications

1. Dispositif de réglage pour un véhicule automobile, conçu et prévu pour actionner une pièce du véhicule, comprenant
- un élément d'actionnement (35) monté en pivotement,
- un mécanisme de transmission de force au moyen duquel une force de réglage peut être appliquée à l'élément d'actionnement (35) de sorte que celui-ci est pivoté, et
- un élément de commande (3) monté en pivotement et accouplé à l'élément d'actionnement (35), qui peut coopérer avec une pièce de réglage disposée à la suite,
dans lequel une butée finale (E) est associée à l'élément de commande (3), qui limite l'angle de pivotement maximum de l'élément de commande (3), et l'élément d'actionnement (35) agit sur l'élément de commande (3) via un premier élément élastique (101) de telle façon que lors d'un mouvement de pivotement de l'élément d'actionnement (35) l'élément de commande (3) est entraîné conjointement, et l'élément d'actionnement (35) peut poursuivre son mouvement de pivotement sous déformation du premier élément élastique (101) quand une poursuite du mouvement de pivotement de l'élément de commande (3) est empêchée par la butée finale (E),
**caractérisé en ce que** l'élément de commande (3) est en liaison d'action avec la butée finale (E) via un second élément élastique (102).

2. Dispositif de réglage selon la revendication 1, **caractérisé en ce que** l'élément d'actionnement (35) et l'élément de commande (3) sont montés coaxialement.

3. Dispositif de réglage selon la revendication 1 ou 2, **caractérisé en ce que** le second élément élastique (102) est déformé lors d'un mouvement de pivotement de l'élément de commande (3) jusqu'à ce que la butée finale (E), conjointement avec le second élément élastique déformé (102), s'oppose à une poursuite du mouvement de pivotement de l'élément de commande (3).

4. Dispositif de réglage selon l'une des revendications précédentes, **caractérisé en ce que** le second élément élastique (102) met sous précontrainte l'élément de commande (3) dans une position normale.

5. Dispositif de réglage selon la revendication 4, **caractérisé en ce que** le second élément élastique (102) met l'élément de commande (3) sous précontrainte contre une contrebutée.

6. Dispositif de réglage selon l'une des revendications précédentes, **caractérisé en ce que** le second élément élastique (102) est formé par un ressort à bras qui comprend deux bras libres (102a, 102b), dont un bras (102a) est appliqué et s'appuie sur l'élément de commande (3) et l'autre bras (102b) est appliqué et s'appuie sur la butée finale (E).

7. Dispositif de réglage selon l'une des revendications précédentes, **caractérisé en ce que** le second élément élastique (102) est monté sur l'élément de commande (3).

8. Dispositif de réglage selon l'une des revendications précédentes, **caractérisé en ce que** le premier élément élastique (101) est formé par un ressort à bras comprenant deux bras libres (101a, 101b).

9. Dispositif de réglage selon la revendication 8, **caractérisé en ce que**, lors d'un mouvement de rotation, l'élément d'actionnement (35) agit sur un bras libre (101a) du premier élément élastique (101), et **en ce qu'**alors l'autre bras libre (101b) de l'élément élastique (101) agit sur l'élément de commande (3).

10. Dispositif de réglage selon la revendication 8 ou 9, **caractérisé en ce que**, lors d'un mouvement de rotation déclenché par application d'une force à l'élément d'actionnement (35), l'élément d'actionnement (35) agit sur un bras (101a) avant en direction de rotation (D) du premier élément élastique (101), et **en ce que** l'élément de commande (3) est entraîné par un bras (101b) arrière en direction de rotation (D) du premier élément élastique (101).

11. Dispositif de réglage selon l'une des revendications 8 à 10, **caractérisé en ce que** le premier élément élastique (101) est réalisé sous forme de ressort rotatif.

12. Dispositif de réglage selon l'une des revendications 8 à 11, **caractérisé en ce que**, entre les bras libres (101a, 101b) du premier élément élastique (101) sont agencés respectivement un tronçon (33, 36) de l'élément de commande (3) d'une part et de l'élément d'actionnement (35) d'autre part, qui peuvent agir respectivement sur l'un au moins des bras libres (101a, 101b).

13. Dispositif de réglage selon l'une des revendications précédentes, **caractérisé en ce que** le premier élément élastique (101) est monté sur l'élément de commande (3).

14. Dispositif de réglage selon l'une des revendications précédentes, **caractérisé en ce que** le mécanisme de transmission de force (8) comprend un élément de transmission de force allongé (81), qui attaque l'élément d'actionnement (35).

15. Dispositif de réglage selon la revendication 14, **caractérisé en ce que** l'élément de transmission de force allongé (81) est réalisé sous forme d'organe de traction.

16. Dispositif de réglage selon la revendication 15, **caractérisé en ce que** l'organe de traction (81) forme l'âme d'un système à câble Bowden (8).

17. Dispositif de réglage selon l'une des revendications précédentes, **caractérisé en ce que**, en l'absence d'application d'une force via le mécanisme de transmission de force (8) sur l'élément d'actionnement (35), l'élément de commande (3) est précontraint au moyen du second élément élastique (102) jusque dans une position normale.

18. Dispositif de réglage selon l'une des revendications précédentes, **caractérisé en ce que** l'élément de commande (3) coopère avec une pièce de réglage (2), agencée à la suite, d'un véhicule automobile.

19. Dispositif de réglage selon la revendication 18, **caractérisé en ce que** l'élément de commande (3) peut être amené par pivotement en engagement et hors d'engagement avec la pièce de réglage (2) agencée à la suite.

20. Dispositif de réglage selon la revendication 18 ou 19, **caractérisé en ce que** la pièce de réglage (2) est associé à un siège de véhicule réglable (G, R).

21. Dispositif de réglage selon l'une des revendications 18 à 20, **caractérisé en ce que** la pièce de réglage (2) forme un élément de verrouillage avec un système à mémoire (1, 2) au moyen duquel peut être mémorisée une position longitudinale d'un siège de véhicule (G, R), **en ce que** l'élément de verrouillage (2) s'engage dans un emplacement de verrouillage (111) correspondant à la position longitudinale du siège.

22. Dispositif de réglage selon la revendication 21, **caractérisé en ce que** l'élément de verrouillage (2) peut être amené, par pivotement de l'élément d'actionnement (35), en engagement et hors d'engagement avec ledit au moins un emplacement de verrouillage (111).

23. Dispositif de réglage selon la revendication 4 ou 5 et l'une des revendications 18 à 22, **caractérisé en ce que**, dans l'état dans lequel l'élément de commande se trouve dans sa position normale sous l'action du second élément élastique (102), l'élément de commande agit sur une zone d'entraînement (23) de la pièce de réglage (2) agencée à la suite, de sorte que la pièce de réglage (2) peut être entraînée lors d'un mouvement de l'élément de commande (3) dans la direction de réglage (L) du dispositif de réglage.

24. Dispositif de réglage selon l'une des revendications précédentes, **caractérisé en ce que**, entre la butée finale (E) et l'élément de commande (3), agit un organe élastique additionnel (102a) qui permet un léger mouvement supplémentaire de l'élément de commande (3) quand la déformation du premier élément élastique (101) est achevée.

25. Dispositif de réglage selon la revendication 24, **caractérisé en ce que** l'organe élastique additionnel est formé par une zone partielle (102a) du second élément élastique (102).

26. Dispositif de réglage selon la revendication 6 et 25, **caractérisé en ce que** l'organe élastique additionnel est formé par un bras libre déformable (102a) du second élément élastique (102).

27. Dispositif de réglage selon l'une des revendications précédentes, **caractérisé en ce que** le mécanisme de transmission de force (8) est couplé avec le dossier rabattable (R) d'un siège de véhicule (G, R) de sorte qu'en rabattant le dossier (R) vers l'avant, il est possible d'appliquer une force de réglage à l'élément d'actionnement (35) pour faire pivoter celui-ci.

28. Siège de véhicule automobile comprenant
- un châssis de siège (G),
- un dossier (R), qui est monté pivotant sur le châssis de siège (G) et qui est rabattable vers l'avant en direction d'une surface d'assise du châssis de siège,
- un guidage longitudinal sur rails (101, 102) au moyen duquel le châssis de siège (G) est déplaçable pour régler la position longitudinale du siège dans la direction longitudinale (L) des rails,
- un dispositif d'immobilisation (5) pour arrêter le guidage longitudinal à rails dans une position longitudinale préalablement établie pour le siège,
- un mécanisme d'accouplement (7) qui déverrouille le dispositif d'immobilisation (5) quand le dossier (R) est rabattu sur la surface d'assise,
- un système à mémoire, au moyen duquel le châssis de siège peut, lors d'un déplacement en direction longitudinale (L) des rails, être maintenu dans une position prédéterminée du siège en position longitudinale, définie comme position mémoire,
- un dispositif de verrouillage du système à mémoire pour verrouiller une position mémoire établie, et
- un dispositif de réglage pour actionner une pièce de réglage (2) du dispositif de verrouillage qui comprend un mécanisme de transmission de force (8) couplé d'une part au dossier rabattable (R) et d'autre part à un élément d'actionnement (35), ainsi qu'un élément de commande (3) susceptible d'être actionné par l'élément d'actionnement (35),
**caractérisé en ce que**
le dispositif de réglage est réalisé selon l'une des revendications précédentes.
